# EUROPEAN PATENT SPECIFICATION

(11) **EP 4 465 529 B1**
(45) Date of publication and mention of the grant of the patent: **02.09.2026**
(21) Application number: 24168192.3
(22) Date of filing: 03.04.2024
(51) Int. Cl.: H02S 30/10, F24S 25/20

(54) **PHOTOVOLTAIC MODULE**
FOTOVOLTAISCHES MODUL
MODULE PHOTOVOLTAÏQUE

(30) Priority: 19.05.2023 CN 202310583951; 24.11.2023 CN 202311590116; 24.11.2023 CN 202323195621 U; 24.11.2023 CN 202311584940
(43) Date of publication of application: 20.11.2024
(73) Proprietor: JINKO SOLAR CO., LTD., Shangrao, Jiangxi 334100 (CN); Jinko Solar (Haining) Co., Ltd., Haining City, Zhejiang 314415 (CN)
(72) Inventor: YANG, Sen, SHANGRAO 334100 (CN); LV, Pengyu, SHANGRAO 334100 (CN); XIAO, Pengjun, SHANGRAO 334100 (CN); SHEN, Wei, SHANGRAO 334100 (CN); OU, Peng, SHANGRAO 334100 (CN); GUI, Xiaomeng, SHANGRAO,334100 (CN); DENG, Zhiliang, SHANGRAO 334100 (CN); YANG, Fei, SHANGRAO 334100 (CN); WANG, Boyang, SHANGRAO 334100 (CN); YU, Tong, SHANGRAO 334100 (CN); CHENG, Yi, SHANGRAO 334100 (CN); ZHAO, Liangyin, SHANGRAO 334100 (CN)
(74) Representative: Spachmann, Holger

(56) References cited:
- CN-U- 207 801 848
- CN-U- 210 918 003
- US-A1- 2010 132 766
- US-A1- 2014 360 558

## Description

### TECHNICAL FIELD

The present disclosure relates to the technical field of photovoltaics, and in particular, to a photovoltaic module and a photovoltaic facility.

### BACKGROUND

The photovoltaic module includes a frame and a laminate. The frame protects the laminate and improves structural strength at edge positions of the laminate. At present, the laminate may extend into the frame. That is, the frame may wrap edges of the laminate. Therefore, the frame may block part of a light-receiving surface and part of an opposite surface of the laminate, thereby reducing a light-receiving area of the laminate and causing a decrease in efficiency of the entire module. The patent disclosures CN210918003U, US2014360558A1, US2010132766A1 and CN207801848U are regarded as prior art documents.

### SUMMARY

The present disclosure provides a photovoltaic module and a photovoltaic facility.

In one aspect of the present disclosure, a photovoltaic module is provided. The photovoltaic module includes a laminate, a frame and a connecting adhesive. The frame includes a first portion, a second portion, and a third portion. The second portion and the third portion are respectively connected to two ends of the first portion. The first direction is parallel to a width direction of the photovoltaic module, the second direction is parallel to a length direction of the photovoltaic module, and the third direction is parallel to a thickness direction of the photovoltaic module and perpendicular to the first direction. Both the second portion and the third portion extend along a third direction, and the first portion is fixedly connected to the back surface of the laminate through the connecting adhesive. Along the third direction, at least part of the first portion is recessed in a direction away from the photovoltaic module to form an accommodating groove, and the accommodating groove is configured to accommodate at least part of the connecting adhesive.

In some embodiments, the first portion, the second portion, and the third portion define an accommodating space, and an opening is provided between the second portion and the third portion, and the accommodating space is communicated with outside through the opening. The frame further includes a first extension portion and a second extension portion.

Along the third direction, an end of the second portion away from the first portion is fixedly connected to the first extension portion, and the first extension portion extends towards interior of the accommodating space; and/or, along the third direction, an end of the third portion away from the first portion is fixedly connected to the second extension portion, and the second extension portion extends towards the interior of the accommodating space.

In some embodiments, an end of the first extension portion away from the second portion is provided with a first limiting portion, and the first limiting portion extends along the third direction towards the first portion; and/or, an end of the second extension portion away from the third portion is provided with a second limiting portion, and the second limiting portion extends along the third direction towards the first portion.

In some embodiments, the photovoltaic module further includes a connecting adhesive, the second portion is fixedly connected to the back surface of the laminate, the second portion and the third portion are distributed along the third direction, the connecting adhesive includes at least a first adhesive and a second adhesive distributed along the first direction, the first adhesive is configured to pre-fix the second portion and the back surface of the laminate, and the second adhesive is configured to bond and fix the second portion and the back surface of the laminate.

In some embodiments, the frame includes two first frames arranged opposite to each other along the first direction, and length directions of the first frames are parallel to a second direction, the second direction being parallel to a length direction of the photovoltaic module, the laminate includes first edges arranged opposite to each other along the first direction and second edges arranged opposite to each other along the second direction, and in the first direction, a minimum distance between the first frame and the first edge ranges from 0 to 150 mm; and/or, the frame further includes two second frames arranged opposite to each other along the second direction, and length directions of the second frames are parallel to the first direction, and in the second direction, a minimum distance between the second frame and the second edge ranges from 0 to 150 mm.

In some embodiments, the frame further includes one reinforcing frame, the one reinforcing frame includes at least one third frame located between the two first frames along the first direction, an angle α between a length direction of the third frame and the second direction satisfies: 0°≤α<90°, and in the first direction, a minimum distance between the third frame and the first frame ranges from 300 mm to 450 mm, or the frame further includes a plurality of third frames distributed along the first direction and/or the second direction, each reinforcing frame includes at least one third frame located between the two first frames along the first direction, an angle α between a length direction of the third frame and the second direction satisfies: 0°≤α<90°, in the first direction, a minimum distance between the third frame and the first frame ranges from 300 mm to 450 mm, and along the first direction, a distance between adjacent third frames ranges from 200 mm to 550 mm; and/or, the frame further includes one reinforcing frame, the one reinforcing frame includes at least one fourth frame located between the two second frames along the first direction, an angle α between a length direction of the fourth frame and the first direction satisfies: 0°≤α<90°, and, in the second direction, a minimum distance between the fourth frame and the second frame ranges from 500 mm to 1150 mm, or the frame further includes a plurality of fourth frames distributed along the first direction and/or the second direction, each reinforcing frame includes at least one fourth frame located between the two second frames along the first direction, an angle α between a length direction of the fourth frame and the first direction satisfies: 0°≤α<90°, in the second direction, a minimum distance between the fourth frame and the second frame ranges from 500 mm to 1150 mm, and a distance between adjacent fourth frames ranges from 300 mm to 750 mm.

In some embodiments, the frame includes two first frames and two second frames, and the first frames and the second frames each includes a first portion, a second portion, and a third portion. The first frames extend along a second direction, the second direction being parallel to a length direction of the photovoltaic module, the second frames extend along the first direction, and the two first frames are fixedly connected to the two second frames so that the frame forms a rectangular structure. The frame further includes a reinforcing frame including a first portion, a second portion, and a third portion. Along the first direction, two ends of the reinforcing frame are fixedly connected to the first frames respectively, and along the second direction, and the reinforcing frame is arranged between the two second frames.

In the present disclosure, the frame can support the laminate, which reduces a risk of damages to the laminate by an external force during transportation, mounting, and use, and prolongs a service life of the laminate. The frame on the back surface reduces a risk of blocking the front surface, increases an effective area of the front surface for absorbing sunlight, and improves solar light absorption efficiency of the photovoltaic module, thereby improving photoelectric conversion efficiency of the photovoltaic module. The clamping portion is fixed to the color steel tile, and the connecting assembly has one end fixedly connected to the photovoltaic module and another end rotatable relative to the clamping portion. Therefore, when the photovoltaic module is blown by wind and is entirely lifted upwards along a height direction of the photovoltaic facility, or a middle position of the photovoltaic module along the width direction thereof is pressed, causing two ends to be lifted upwards along the height direction of the photovoltaic facility, an end of the connecting assembly connected to the photovoltaic module can be driven to move upwards synchronously. In this case, the other end of the connecting assembly can rotate relative to the fixed portion. Compared with a structure in which two ends of the connecting assembly are fixedly connected to the photovoltaic module and the clamping portion respectively, the structure in which the connecting assembly is pivotally connected to the fixed portion can prevent shear deformation of the connecting assembly when the photovoltaic module is lifted up, thereby ensuring structural stability of the clamp and prolonging a service life of the clamp. Since the connecting assembly can move synchronously with the photovoltaic module, a stable connection relationship between the two can always be maintained, and loosening is not easy, which improves stability of mounting of the photovoltaic module.

It should be understood that the general description above and the detailed description in the following are merely exemplary and illustrative, and do not limit the present disclosure.

### BRIEF DESCRIPTION OF DRAWINGS

FIG. 1 is a schematic structural diagram of a color steel tile according to some embodiments of the present disclosure;
FIG. 2 is a schematic structural diagram of the color steel tile according to some other embodiments of the present disclosure;
FIG. 3 is a schematic diagram of a partial structure of a photovoltaic module according to some embodiments of the present disclosure, in which a frame includes a first portion, a second portion, and a third portion, and the second portion is bonded to a laminate;
FIG. 4 is a schematic diagram of a partial structure of the photovoltaic module according to some other embodiments of the present disclosure, in which the frame includes the first portion, the second portion, and the third portion, and the second portion is bonded to the laminate;
FIG. 5 is a schematic diagram of a partial structure of the photovoltaic module according to some other embodiments of the present disclosure, in which the frame includes the first portion, the second portion, the third portion, and a fourth portion, and the second portion is bonded to the laminate;
FIG. 6 is a schematic diagram of a partial structure of the photovoltaic module according to some other embodiments of the present disclosure, in which the frame includes the first portion, the second portion, the third portion, the fourth portion, and a support portion, and the second portion is bonded to the laminate;
FIG. 7 is a bottom view of the photovoltaic module according to some embodiments of the present disclosure, in which two first frames are mounted on a second surface of the laminate;
FIG. 8 is a bottom view of the photovoltaic module according to some other embodiments of the present disclosure, in which two second frames are mounted on the second surface of the laminate;
FIG. 9 is a bottom view of the photovoltaic module according to some other embodiments of the present disclosure, in which two first frames and two second frames are mounted on the second surface of the laminate;
FIG. 10 is a bottom view of the photovoltaic module according to some other embodiments of the present disclosure, in which a first frame, a second frame, a third frame, and a fourth frame are mounted on the second surface of the laminate;
FIG. 11 is a bottom view of the photovoltaic module according to some other embodiments of the present disclosure;
FIG. 12 is a cross-sectional view taken along line AA' of FIG. 11;
FIG. 13 is a schematic diagram of a sectional structure of the frame in FIG. 11 according to some embodiments;
FIG. 14 is a schematic diagram of a sectional structure of the frame in FIG. 11 according to some other embodiments;
FIG. 15 is a bottom view of the photovoltaic module in FIG. 11 according to some other embodiments;
FIG. 16 is a bottom view of the photovoltaic module in FIG. 11 according to some other embodiments;
FIG. 17(a) to FIG. 17(b) are schematic structural diagrams of a frame structure according to some embodiments of the present disclosure;
FIG. 18(a) to FIG. 18(b) are schematic structural diagrams of the frame structure according to some embodiments of the present disclosure;
FIG. 19(a) to FIG. 19(b) are schematic structural diagrams of the frame structure according to some embodiments of the present disclosure;
FIG. 20(a) to FIG. 20(b) are schematic structural diagrams of the frame structure according to some embodiments of the present disclosure;
FIG. 21(a) to FIG. 21(b) are schematic structural diagrams of the frame structure according to some embodiments of the present disclosure;
FIG. 22 is a flowchart of assembly of the frame in FIG. 15;
FIG. 23 is a flowchart of assembly of the frame in FIG. 17(a) and FIG. 17(b);
FIG. 24 is a flowchart of assembly of the frame in FIG. 18(a) and FIG. 18(b);
FIG. 25 is a flowchart of assembly of the frame in FIG. 18(a) and FIG. 18(b);
FIG. 26 is a flowchart of assembly of the frame in FIG. 19(a) and FIG. 19(b);
FIG. 27 is a flowchart of assembly of the frame in FIG. 19(a) and FIG. 19(b);
FIG. 28 is a flowchart of assembly of the frame in FIG. 20(a) and FIG. 20(b);
FIG. 29 is a flowchart of assembly of the frame in FIG. 21(a) and FIG. 21(b);
FIG. 30 is a schematic structural diagram of a photovoltaic facility according to some embodiments of the present disclosure;
FIG. 31 is a schematic structural diagram of the photovoltaic facility according to some other embodiments of the present disclosure;
FIG. 32 is a schematic diagram of assembly of the frame in FIG. 13 and a first connecting member;
FIG. 33 is a schematic structural diagram of the first connecting member in FIG. 32;
FIG. 34 is a schematic diagram of a sectional structure of the frame in FIG. 13 according to some other embodiments;
FIG. 35 is a schematic diagram of assembly of the frame in FIG. 34 and the first connecting member;
FIG. 36 is a schematic structural diagram of the frame in FIG. 35 and the first connecting member according to some other embodiments;
FIG. 37 is a schematic structural diagram of the frame in FIG. 35 and the first connecting member according to some other embodiments;
FIG. 38 is a schematic structural diagram of the first connecting member in FIG. 32, the second connecting member, and the frame according to some other embodiments;
FIG. 39 is a schematic diagram of a sectional structure of the frame in FIG. 11 according to some other embodiments;
FIG. 40 is a schematic diagram of a sectional structure of the frame in FIG. 11 according to some other embodiments;
FIG. 41 is a schematic structural diagram of the second connecting member in FIG. 31;
FIG. 42 is a schematic structural diagram of the first connecting member in FIG. 38, the second connecting member, and the frame according to some other embodiments;
FIG. 43 is a schematic diagram of assembly of the first connecting member and the second connecting member;
FIG. 44 is a schematic diagram of assembly of a clamping portion in FIG. 31 and a connecting assembly;
FIG. 45 is a schematic structural diagram of a clamp in FIG. 31 according to some other embodiments;
FIG. 46 is a schematic structural diagram of an locking structure in FIG. 31; and
FIG. 47 is a schematic structural diagram of the clamp in FIG. 31.

Reference signs:
100: color steel tile;
   110: male rib;
   120: female rib;
   130: folding portion;
   140: bottom plate;
   150: locking structure;
   160: bending portion;
      1601: first bending portion;
      1602: second bending portion;
200: clamp;
   201: second planar section;
   202: second curved section;
   203: accommodating cavity;
   204: arc section;
   210: first clamping portion;
      211: first positioning protrusion;
      212: first straight arm section;
   220: second clamping portion;
      221: first positioning groove;
      222: second straight arm section;
   230: connecting assembly;
      231: first connecting member;
         231A: connecting groove;
         231B: connection limiting section;
            231Ba: limiting protrusion;
         231C: connecting section;
         231D: horizontal extension section;
         231E: vertical extension section;
         231F: support groove;
         231G: second positioning recess;
      232: second connecting member;
         232A: clamping limiting section;
         232B: anti-slip member;
         232C: protruding portion;
         232D: second positioning protrusion;
      233: rotation fitting member;
         233A: rotating portion;
   240: fixed portion;
      241: rotating shaft;
      242: first limiting groove;
   250: limiting member;
   260: longitudinal fastener;
   270: transverse fastener;
300: photovoltaic module;
   310: laminate;
      3101: first surface;
      3102: second surface;
      3103: first edge;
      3104: second edge;
   320: frame structure;
      3201: first frame;
         3201A: first frame segment;
         3201B: insert;
            3201Ba: third section;
            3201Bb: fourth section;
         3202: second frame;
         3203: reinforcing frame;
         3204: third frame;
         3205: fourth frame;
         3206: insertion rod;
         3207: connecting member;
            3207A: first section;
            3207B: second section;
         321: first portion;
            321A: first surface;
            321B: second surface;
            321C: accommodating groove;
         322: second portion;
            322A: second limiting groove;
            322B: recess;
            322C: bulge;
         323: third portion;
         324: accommodating space;
         325: opening;
         326: first extension portion;
         327: second extension portion;
         328: first limiting portion;
         329: second limiting portion;
         3210: support portion;
         3211: fourth portion;
   330: connecting adhesive;
      3301: first adhesive;
      3302: second adhesive;
400: bracket.

The accompanying drawings herein, which are incorporated in and constitute a part of this specification, illustrate embodiments consistent with the present disclosure and, together with the specification, serve to explain principles of the present disclosure.

### DESCRIPTION OF EMBODIMENTS

In order to better understand the technical solution of the present disclosure, embodiments of the present disclosure are described in detail below with reference to the accompanying drawings.

It should be clear that the embodiments described are only some rather than all of the embodiments of the present disclosure. All other embodiments acquired by those of ordinary skill in the art without creative efforts based on the embodiments of the present disclosure fall within the protection scope of the present disclosure.

The terms used in the embodiments of the present disclosure are intended solely to describe particular embodiments and are not intended to limit the present disclosure. As used in the specification of the present disclosure and the appended claims, the singular forms of "a/an", "said", and "the" are intended to include plural forms, unless otherwise clearly specified in the context.

It should be understood that the term "and/or" used herein only describes an association relationship between associated objects and represents that three relationships may exist. For example, A and/or B may represent the following three cases: only A exists, both A and B exist, and only B exists. In addition, the character "/" herein generally means that associated objects before and after it are in an "or" relationship.

It should be noted that orientation terms such as "above", "under", "left", and "right" described in embodiments of the present disclosure are described from the perspectives shown in the accompanying drawings, and should not be construed as limiting the embodiments of the present disclosure. In addition, it should also be understood that, in the context, one element described as being connected "on/above" or "under/below" another element not only means that the element may be directly connected "on/above" or "under/below" the other element, but also means that the element may be indirectly connected "on/above" or "under/below" the other element through an intermediate element.

Some embodiments of the present disclosure provides a photovoltaic facility, including a plurality of color steel tiles 100 and a plurality of photovoltaic modules 300 mounted on the color steel tiles 100. The photovoltaic module 300 has a first direction X, a second direction Y, and a third direction Z. The first direction X is parallel to a width direction of the photovoltaic module 300, the second direction Y is parallel to a length direction of the photovoltaic module 300, and the third direction Z is parallel to a thickness direction of the photovoltaic module 300.

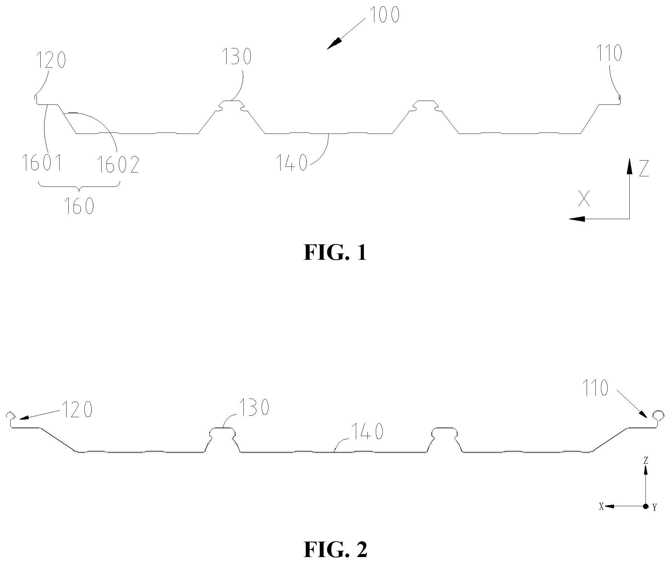

As shown in FIG. 1, each color steel tile 100 includes a male rib 110 and a female rib 120 arranged opposite to each other along a width direction of the color steel tile 100, and the male rib 110 of the color steel tile 100 is fixedly connected to the female rib 120 of an adjacent color steel tile 100 by locking or docking or engaging to form a locking structure. The male rib 110 and the female rib 120 are connected through a bottom plate 140. A part of the bottom plate 140 protrudes along a thickness direction of the color steel tile 100 to form a folding portion 130 to improve wind-tearing resistance of the color steel tile 100. The male rib 110 and the bottom plate 140 are connected through a bending portion 160, and the female rib 120 and the bottom plate 140 are connected through another bending portion 160. The bending portion 160 includes a first bending portion 1601 extending along the width direction of the color steel tile 100 and a second bending portion 1602 extending obliquely. The first bending portion 1601 has a first end connected to the male rib 110 or the female rib 120 and a second end connected to the bottom plate 140 through the second bending portion 1602. The locking structure may extend upright. For example, the locking structure may be a 360° vertical locking as shown in FIG. 1, or including a round locking part as shown in FIG. 2. A specific type of the locking structure is not limited in the present disclosure.

Along a length direction of the color steel tile 100, a plurality of photovoltaic modules 300 are mounted on one color steel tile 100. The photovoltaic modules 300 may be arranged at intervals. One of the second direction Y and the first direction X of the photovoltaic module 300 is parallel to the length direction of the color steel tile 100, and the other is parallel to the width direction of the color steel tile 100. In some embodiments of the present disclosure, for example, the first direction X of the photovoltaic module 300 is parallel to the width direction of the color steel tile 100, and the second direction Y of the photovoltaic module 300 is parallel to the length direction of the color steel tile 100.

Along the first direction X, two ends of the photovoltaic module 300 are fixedly connected to the male rib 110 and the female rib 120 of the color steel tile 100 through a clamp respectively, or two ends of the photovoltaic module 300 are fixedly connected to the folding portions 130 of the color steel tile 100 through the clamp respectively, or two ends of the photovoltaic module 300 are bonded to the first bending portions 1601 respectively, or two ends of the photovoltaic module 300 are bonded to the folding portions 130 respectively. A mounting manner and a mounting position of the photovoltaic module 300 on the color steel tile 100 are not limited in the present disclosure.

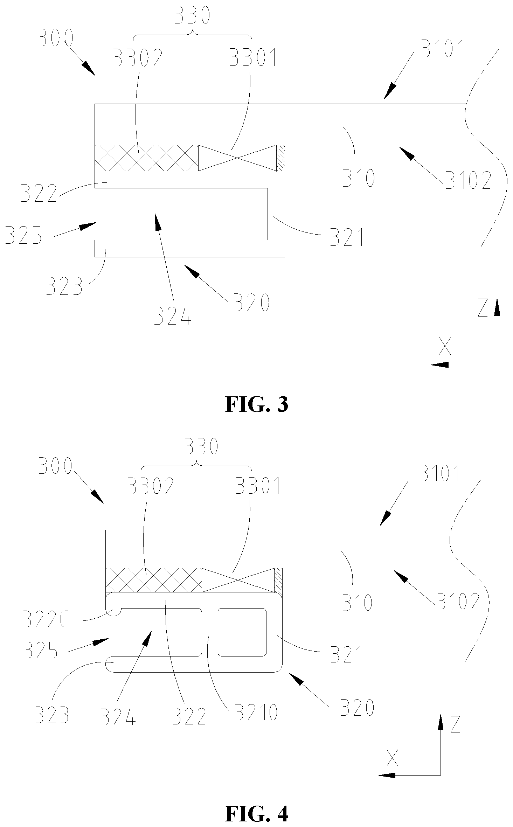

In some embodiments of the present disclosure, the photovoltaic module 300 as shown in FIG. 3 to FIG. 6 is provided. The photovoltaic module 300 includes a laminate 310 and one or more frames 320. The laminate 310 includes a first surface 3101 and a second surface 3102 opposite to the first surface 3101. The first surface 3101 is a front/light-facing surface. The light-facing surface 3101 is located on one side of the laminate 310 facing the sunlight. The second surface 3102 is located on one side of the laminate 310 facing away from the sunlight. The frame 320 is mounted on the back surface 3102. The frame 320 has only one surface connected and fixed to the laminate 310. In other words, the frame 320 is arranged only on the back side of the laminate 310.

In this embodiment, the frame 320 is mounted on the laminate 310, and the frame 320 can support the laminate 310, which reduces a risk of damages to the laminate 310 by an external force during transportation, mounting, and use, thereby prolonging a service life of the laminate 310 and improving operational stability of the photovoltaic module 300. The frame 320 on the back surface 3102 does not block or shield the light-facing surface 3101, thereby improving utilization of the light-facing surface 3101, that is, increasing an effective area on the light-facing surface 3101 for absorbing sunlight, improving solar light absorption efficiency of the photovoltaic module 300, improving photoelectric conversion efficiency of the photovoltaic module 300, and improving overall operational efficiency of the photovoltaic facility.

The frame 320 is bonded to the color steel tile 100 through an adhesive member such as glue, an adhesive tape, or a double-sided tape, or the frame 320 is fixedly connected to the color steel tile 100 through a clamp, or the frame 320 is fixedly connected to the color steel tile 100 through a fastener such as a screw or a bolt, realize the mounting of the photovoltaic module 300 on the color steel tile 100.

In an embodiment, as shown in FIG. 3 to FIG. 6, the frame 320 includes a first portion 321, a second portion 322, and a third portion 323. The second portion 322 and the third portion 323 are respectively connected to two ends of the first portion 321, and both the second portion 322 and the third portion 323 extend along the first direction X. The second portion 322, the third portion 323, and the first portion 321 define an accommodating space 324, that is, the second portion 322 and the third portion 323 are positioned on two sides of the first portion 321 along the third direction Z. Along a width direction of the frame 320, namely the first direction X, an end of the second portion 322 away from the first portion 321 and an end of the third portion 323 away from the first portion 321 are both in a suspended state, thereby forming an opening 325, and the accommodating space 324 is communicated with the outside through the opening 325 in the first direction X. The second portion 322 is fixedly connected to the back surface 3102, or the third portion 323 is fixedly connected to the back surface 3102. When the second portion 322 is fixedly connected to the back surface 3102, in the first direction X, the opening 325 is located on a left side of the frame 320. When the third portion 323 is fixedly connected to the back surface 3102, in the first direction X, the opening 325 is located on a right side of the frame 320. One of the second portion 322 and the third portion 323 is fixedly connected to the back surface 3102, so that the frame 320 has only one surface configured to be connected and fixed to the laminate 310. In other words, the frame 320 is arranged only on the back side of the laminate 310, so as to improve solar light absorption efficiency of the photovoltaic module 300.

In this embodiment, the first portion 321, the second portion 322, and the third portion 323 define the accommodating space 324. That is, there is a preset distance between the second portion 322 and the third portion 323 in the third direction Z. During the mounting, transportation, and use of the photovoltaic module 300, when the photovoltaic module 300 is subjected to a force along the third direction Z, the laminate 310 can cause the second portion 322 to deform in a direction close to or away from the third portion 323, or the third portion 323 can be driven by the color steel tile 100 to deform in a direction close to or away from the second portion 322, that is, the force acting on the frame 320 is counteracted by deformation of the second portion 322 or the third portion 323, thereby reducing a risk of damages to the frame 320, prolonging the service life of the frame 320, and improving operational stability of the frame 320. At the same time, through the deformation of the second portion 322 or the third portion 323, forces between the frame 320 and the laminate 310 and between the frame 320 and the color steel tile 100 are reduced, thereby reducing a risk of damages to the laminate 310 and the color steel tile 100, prolonging the service life of the laminate 310 and the color steel tile 100, prolonging the service life of the photovoltaic facility, and improving operational stability of the photovoltaic facility. In addition, when the frame 320 is fixed to the color steel tile 100 through a fastener, the accommodating space 324 can accommodate part of the fastener to reduce an overall size after the frame 320 is connected to the fastener, thereby reducing an overall size of the photovoltaic facility and improving space utilization during the mounting of the photovoltaic facility.

An angle α1 between an extension direction of the first portion 321 and the third direction Z satisfies: 0≤α1≤90°. For example, the angle between the extension direction of the first portion 321 and the third direction Z may be 0, 10°, 20°, 30°, 40°, 50°, 60°, 70°, 80°, 90°, or the like. That is, the first portion 321 may extend along the third direction Z, or the first portion 321 may extend obliquely, to improve structural flexibility of the frame 320. The extension direction of the first portion 321 is not limited in the present disclosure. FIG. 2 to FIG. 5 are based on an example in which the first portion 321 extends along the third direction Z.

As shown in FIG. 3 to FIG. 6, the second portion 322 and the back surface 3102 are bonded and fixed through the connecting adhesive 330 to simplify a fixing structure of the frame 320 and the laminate 310 and reduce mounting cost of the frame 320 and the laminate 310. The connecting adhesive 330 includes, but is not limited to, glue, an adhesive tape, and a double-sided tape. A specific type of the connecting adhesive 330 is not limited in some embodiments of the present disclosure.

**In** an embodiment, as shown in FIGS. 2 to 4 the connecting adhesive 330 includes at least a first adhesive 3301 and a second adhesive 3302 distributed along the width direction of the frame 320. That is, the first adhesive 3301 and the second adhesive 3302 are distributed along the first direction X. The first adhesive 3301 is configured to pre-fix the second portion 322 and the back surface 3102. The second adhesive 3302 is configured to bond and fix the second portion 322 and the back surface 3102. That is, during the fixing of the frame 320 and the laminate 310, the frame 320 and the laminate 310 are pre-fixed through the first adhesive 3301, and then the frame 320 and the laminate 310 are completely fixed through the second adhesive 3302, which reduces a risk of deviation of the frame 320 during the bonding under an external force, thereby improving accuracy of a bonding position of the frame 320 on the back surface 3102.

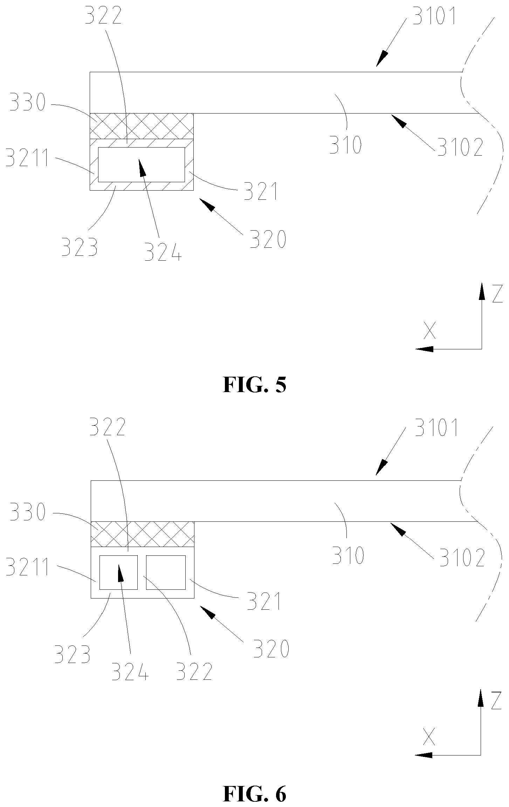

In another embodiment, as shown in FIG. 5, the connecting adhesive 330 is an integral piece. That is, only one bonding and fixing operation is performed on the second portion 322 and the back surface 3102 to simplify the bonding process.

As shown in FIG. 4 and FIG. 6, the frame 320 further includes a support portion 3210 located in the accommodating space 324. Along the third direction Z, two ends of the support portion 3210 are connected to the second portion 322 and the third portion 323 respectively, and along the first direction X, the support portion 3210 divides the accommodating space 324 into a plurality of cavities.

In this embodiment, the support portion 3210 is configured to support the second portion 322 and the third portion 323, which reduces degrees of deformation of the second portion 322 and the third portion 323 during the mounting, transportation, and use, thereby reducing a risk of damages to the frame 320 due to a larger degree of deformation, prolonging the service life of the frame 320, and improving operational stability of the frame 320.

One support portion 3210 may be provided, or a plurality of support portions 3110 are distributed along the width direction of the frame 320, that is, the plurality of support portions 3110 are distributed along the first direction X.

In addition, an angle α2 between an extension direction of the support portion 3210 and the third direction Z satisfies: 0≤α2≤90°. For example, the angle between the extension direction of the support portion 3210 and the third direction Z may be 0, 10°, 20°, 30°, 40°, 50°, 60°, 70°, 80°, 90°, or the like. That is, the support portion 3210 may extend along the third direction Z, or the support portion 3210 may extend obliquely, to improve structural flexibility of the frame 320. The extension direction of the support portion 3210 is not limited in the present disclosure. FIG. 4 to FIG. 6 are based on an example in which the support portion 3210 extends along the third direction Z.

In addition, when the frame 320 is fixed to the color steel tile 100 through a clamp, as shown in FIG. 4, along the first direction X, part of the clamp may extend into the accommodating space 324 through the opening 325 to reduce an overall size after the frame 320 is connected to the clamp, thereby reducing an overall size of the photovoltaic facility and improving space utilization during the mounting of the photovoltaic facility. As shown in FIG. 4, an end of the second portion 322 away from the first portion 321 is provided with a bulge 322C, and/or an end of the third portion 323 away from the first portion 321 is provided with the bulge 322C. In the third direction Z, the bulge 322C blocks part of the accommodating space 324, and the bulge 322C can limit movement of the clamp in the first direction X, thereby reducing a risk of separation of the clamp from the frame 320 during the mounting, transportation, and use and improving stability of the connection between the clamp and the frame 320.

In another embodiment, as shown in FIG. 5 and FIG. 6, the frame 320 further includes a fourth portion 3211, two ends of the fourth portion 3211 are connected to the end of the second portion 322 away from the first portion 321 and the end of the third portion 323 away from the first portion 321 respectively, and along the first direction X, the fourth portion 3211 blocks the accommodating space 324.

In this embodiment, the fourth portion 3211 blocks the accommodating space 324, which prevents liquid, dust, and other impurities in an external environment from entering the accommodating space 324 and corroding the frame 320, thereby prolonging the service life of the frame 320.

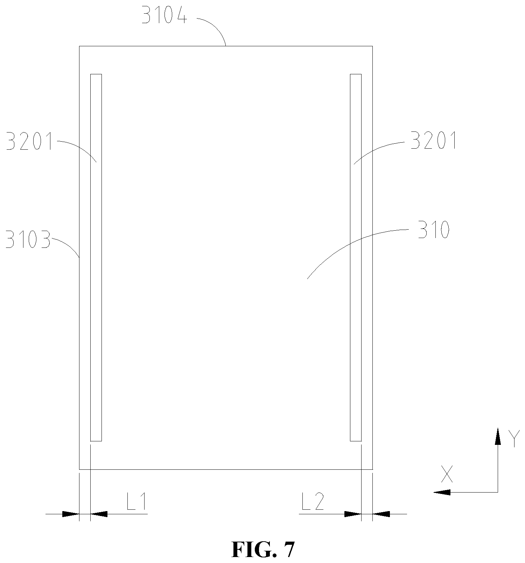

In any of the above embodiments, as shown in FIG. 7, the laminate 310 includes two first edges 3103 arranged opposite to each other along the first direction X, and two second edges 3104 arranged opposite to each other along the second direction Y. The frame 320 is arranged at a middle position of the laminate 310, and/or the frame 320 is arranged at the first edges 3103 of the laminate 310, and/or the frame 320 is arranged at a second edges 3104 of the laminate 310.

As shown in FIG. 7, the frame 320 includes two first frames 3201 arranged opposite to each other along the first direction X, and length directions of the first frames 3201 are parallel to the second direction Y. In the first direction X, a minimum distance L1 between the first frame 3201 on the left and the first edge 3103 on the left satisfies: 0≤L1≤150 mm, and a minimum distance L2 between the first frame 3201 on the right and the first edge 3103 on the right satisfies: 0≤L2≤150 mm.

In this embodiment, the two first frames 3201 near the first edges 3103 of the laminate 310 reduce a risk of damages to the first edges 3103 due to stress concentration during the mounting, transportation, and use, thereby prolonging the service life of the laminate 310, prolonging the service life of the photovoltaic module 300, and improving operational stability of the photovoltaic module 300. If L1>150 mm or L2>150 mm, a distance between the first frame 3201 and the first edge 3103 is larger, and the first frame 3201 may have a poor protection effect on the first edge 3103. Therefore, 0≤L1≤150 mm and 0≤L2≤150 mm can improve the protection effect of the frame 320 on the first edge 3103 of the laminate 310.

A length of the first frame 3201 is determined according to a length of the first edge 3103, and the lengths of the two first frames 3201 may be the same or different.

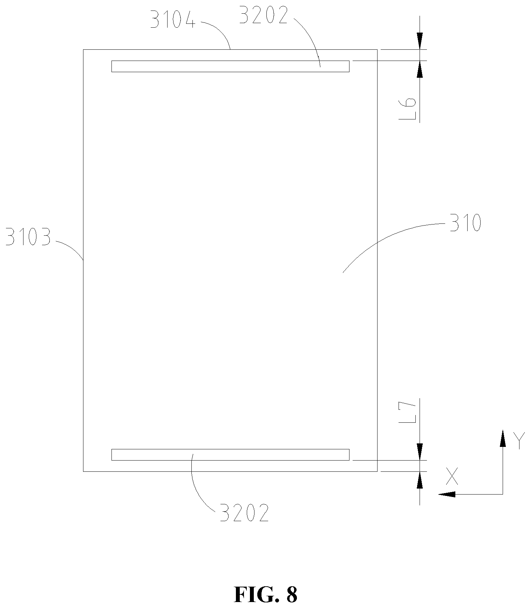

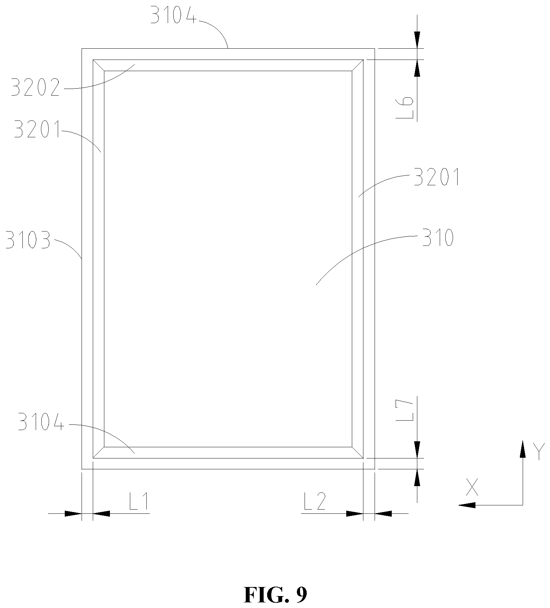

As shown in FIG. 8 and FIG. 9, the frame 320 includes two second frames 3202 arranged opposite to each other along the second direction Y, and length directions of the second frames 3202 are parallel to the first direction X. In the second direction Y. A minimum distance L6 between the upper second frame 3202 and the upper second edge 3104 satisfies: 0≤L6≤150 mm, and a minimum distance L7 between the lower second frame 3202 and the lower second edge 3104 satisfies: 0≤L7≤150 mm.

In this embodiment, the second frame 3202 near the second edge 3104 of the laminate 310 reduces a risk of damages to the second edge 3104 due to stress concentration during the mounting, transportation, and use, thereby prolonging the service life of the laminate 310, prolonging the service life of the photovoltaic module 300, and improving operational stability of the photovoltaic module 300. If L6>150 mm or L7>150 mm, a distance between the second frame 3202 and the second edge 3104 is larger, and the second frame 3202 may have a poor protection effect on the second edge 3104. Therefore, 0≤L6≤150 mm and 0≤L7≤150 mm can improve the protection effect of the frame 320 on the second edge 3104 of the laminate 310.

A length of the second frame 3202 is determined according to a length of the second edge 3104, and the lengths of the two second frames 3202 may be the same or different.

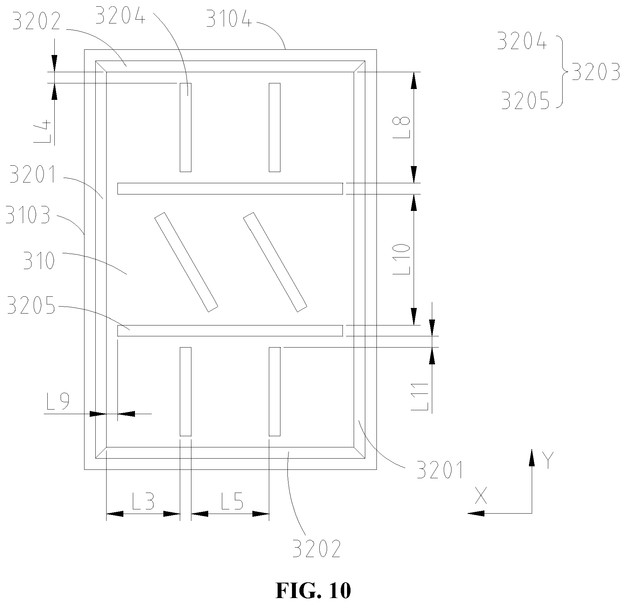

As shown in FIG. 10, the frame 320 further includes a reinforcing frame 3203, and the reinforcing frame 3203 includes at least one third frame 3204. Along the first direction X, the third frame 3204 is located between the two first frames 3201. An angle α3 between a length direction of the third frame 3204 and the second direction Y satisfies: 0°≤α3<90°. For example, α3 may be 0°, 10°, 20°, 30°, 40°, 50°, 60°, 70°, 80°, 89°, or the like. That is, the third frame 3204 may extend along the second direction Y, or the third frame 3204 may extend obliquely. In the first direction X, a minimum distance L3 between the third frame 3204 and the first frame 3201 on the left satisfies: 300 mm≤L3≤450 mm. In the second direction Y, a minimum distance L4 between the third frame 3204 and the first frame 3201 on the right satisfies: 0≤L4≤300 mm. One third frame 3204 is provided, or a plurality of third frames 3204 are distributed along the first direction X and/or the second direction Y. Along the first direction X, a minimum distance L5 between the adjacent third frames 3204 satisfies: 200 mm≤L5≤550 mm.

In this embodiment, the third frame 3204 is arranged at a middle position of the laminate 310 and supports the laminate 310, which reduces a degree of deformation of the laminate 310 in the third direction Z under a force, thereby reducing a risk of damages to the laminate 310 due to a large degree of deformation, prolonging the service life of the photovoltaic module 300, and improving operational stability of the photovoltaic module 300.

If L3<300 mm and L5<200 mm, a larger number of third frames 3204 are required, cost of the photovoltaic module 300 is increased, and at the same time, an overall weight of the photovoltaic module 300 is increased, which is not conducive to mounting and transportation of the photovoltaic module 300. If L5<200 mm, a distance between the adjacent third frames 3204 is smaller, under the influence of factors such as machining errors and mounting errors, there is a risk of interference between the adjacent third frames 3204, thereby increasing mounting difficulty of the third frames 3204. If L3>450 mm, L4>300 mm, and L5>550 mm, distances between the third frame 3204 and the first frame 3201 and between the adjacent third frames 3204 are larger, which reduces a supporting effect of the third frames 3204 on the laminate 310. Therefore, 300 mm≤L3≤450 mm, 0≤L4≤300 mm, and 200 mm≤L5≤550 mm can reduce the number of the third frames 3204 and reduce the cost and the weight of the photovoltaic module 300, and further reduce the mounting difficulty of the third frames 3204, thereby shortening a mounting time of the photovoltaic module 300, improving the supporting effect of the third frames 3204 on the laminate 310, and improving operational stability of the laminate 310.

A length of the third frame 3204 is determined according to a length of the first edge 3103 and a number of the third frames 3204. When a plurality of third frames 3204 are provided, the third frames 3204 may be evenly or unevenly distributed and inclination directions of the third frames 3204 may be the same or different.

As shown in FIG. 10, the reinforcing frame 3203 further includes at least one fourth frame 3205, along the second direction Y, the fourth frame 3205 is located between the third frame 3204 and the second frame 3202, and an angle α4 between an extension direction of the fourth frame 3205 and the first direction X satisfies: 0°≤α4<90°. For example, α4 may be 0°, 10°, 20°, 30°, 40°, 50°, 60°, 70°, 80°, 89°, or the like. In the second direction Y, a minimum distance L8 between the fourth frame 3205 and the second frame 3202 satisfies: 500 mm≤L8≤1150 mm. In the first direction X, a minimum distance L9 between the fourth frame 3205 and the first frame 3201 satisfies: 5 mm≤L9≤30 mm. One fourth frame 3205 is provided, or a plurality of fourth frames 3205 are distributed along the second direction Y and/or the first direction X. Along the second direction Y, a minimum distance L10 between adjacent fourth frames 3205 satisfies: 300 mm≤L10≤750 mm.

In this embodiment, the fourth frame 3205 is arranged at a middle position of the laminate 310 and supports the laminate 310, which reduces a degree of deformation of the laminate 310 in the third direction Z under a force, thereby reducing a risk of damages to the laminate 310 due to a large degree of deformation, prolonging the service life of the photovoltaic module 300, and improving operational stability of the photovoltaic module 300.

If L8<500 mm and L10<300 mm, a larger number of fourth frames 3205 are required, cost of the photovoltaic module 300 is increased, and an overall weight of the photovoltaic module 300 is increased, which is not conducive to mounting and transportation of the photovoltaic module 300. If L8>1150 mm and L9>30 mm, distances between the fourth frame 3205 and the third frame 3204, between the fourth frame 3205 and the second frame 3202, and between the adjacent fourth frames 3205 are larger, which reduces a supporting effect of the fourth frames 3205 on the laminate 310. Therefore, 500 mm≤L8≤1150 mm, 0≤L9≤30 mm, and 300 mm≤L10≤750 mm can reduce the number of the fourth frames 3205, reduce the cost and the weight of the photovoltaic module 300, and improve the supporting effect of the fourth frames 3205 on the laminate 310, thereby improving operational stability of the laminate 310.

A length of the fourth frame 3205 is determined according to lengths of the first edge 3103 and the second edge 3104 and a number of the fourth frame 3205.

One or more of the first frame 3201, the second frame 3202, the third frame 3204, and the fourth frame 3205 may be flexibly arranged on the laminate 310, to increase flexibility of arrangement of the frame 320. That is, the frame 320 on the laminate 310 may have an II shape, a III shape, a rectangle shape, a 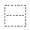 shape, a square grid shape, or other variation structures.

As shown in FIG. 10, when the frame 320 includes both the third frame 3204 and the fourth frame 3205 arranged on the laminate 310, along the second direction Y of the photovoltaic module 300, a minimum distance L11 between the third frame 3204 and the fourth frame 3205 adjacent to each other satisfies: 5 mm≤L11≤30 mm.

In this embodiment, if L11<5 mm, a distance between the third frame 3204 and the fourth frame 3205 is smaller, under the influence of factors such as machining errors and mounting errors, there is a risk of interference between the third frame 3204 and the fourth frame 3205, thereby increasing mounting difficulty of the third frame 3204 and the fourth frame 3205. If L11>30 mm, the distance between the third frame 3204 and the fourth frame 3205 is larger, and fewer third frames 3204 and fourth frames 3205 are provided, which reduces a supporting effect of the third frame 3204 and the fourth frame 3205 on the laminate 310. Therefore, 5 mm≤L11≤ 30 mm reduces the mounting difficulty of the third frame 3204 and the fourth frame 3205, thereby shortening a mounting time of the photovoltaic module 300, and improves the supporting effect of the third frame 3204 and the fourth frame 3205 on the laminate 310, thereby improving operational stability of the laminate 310.

In addition, the third frame 3204 and the second frame 3202 may be fixedly connected through a connector such as a corner piece, or the third frame 3204 and the second frame 3202 may be fixed by welding.

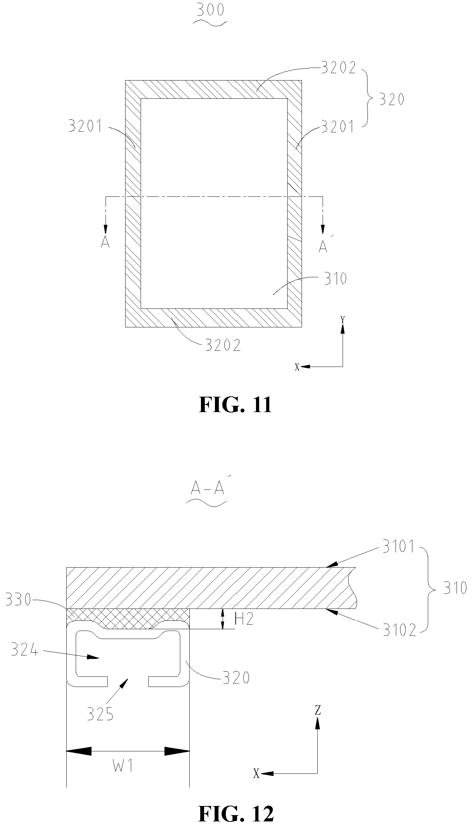

In a second aspect of the present disclosure, the photovoltaic module 300 as shown in FIG. 11 to FIG. 12 is provided. The photovoltaic module 300 includes a laminate 310 and a frame 320. The laminate 310 includes a first surface 3101 and a second surface 3102 arranged opposite to each other along the third direction Z of the photovoltaic module 300. The surface 3101 is a front/light-facing surface, and the second surface 3102 is a back surface. The light-facing surface 3101 faces a light source and is configured to receive direct sunlight. The back surface 3102 faces away from the light source. The frame 320 is fixedly connected to the back surface 3102, and the frame 320 has and only has one surface configured to be connected and fixed to the laminate 310. In other words, the frame 320 is arranged only on a back side of the laminate 310.

In this embodiment, the frame 320 can support the laminate 310, which reduces a risk of damages to the laminate 310 by an external force during transportation, mounting, and use, thereby prolonging the service life of the laminate 310 and improving overall rigidity and operational stability of the photovoltaic module 300. Moreover, when the frame 320 is mounted on the back surface 3102 of the laminate 310, the light-facing surface 3101 of the laminate 310 may not be blocked, thereby increasing an effective area on the light-facing surface 3101 for absorbing sunlight, improving solar light absorption efficiency of the photovoltaic module 300, and improving photoelectric conversion efficiency of the photovoltaic module 300.

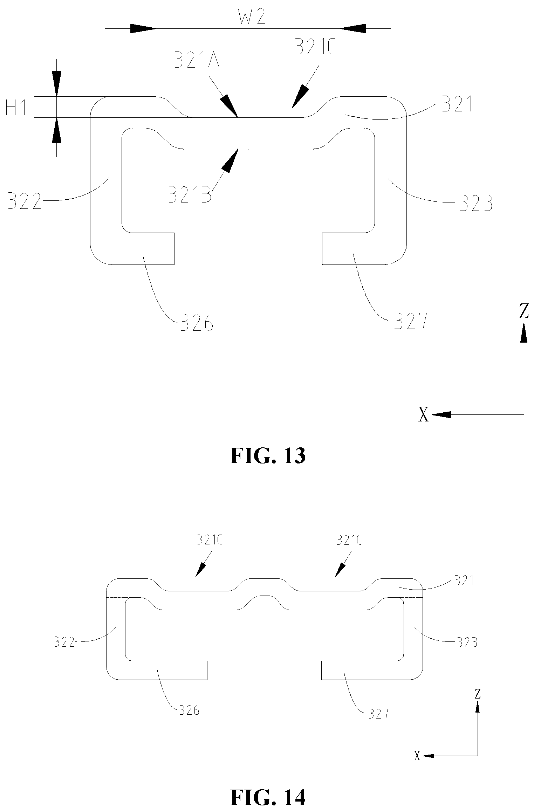

For example, as shown in FIG. 13, the frame 320 includes a first portion 321, a second portion 322, and a third portion 323, and the second portion 322 and the third portion 323 are respectively connected to two ends of the first portion 321. Both the second portion 322 and the third portion 323 extend, from the laminate 310, along the third direction Z , and the first portion 321 is fixedly connected to the back surface 3102, so that the frame 320 has and only has one surface configured to be connected and fixed to the laminate 310. In other words, the frame 320 is arranged only on the back side of the laminate 310, so as to improve solar light absorption efficiency of the photovoltaic module 300.

In this embodiment, along the third direction Z, the first portion 321 includes a first surface 321A and a second surface 321B arranged opposite to each other. The first surface 321A is fixedly connected to the laminate 310, and the second surface 321B is fixedly connected to the second portion 322 and the third portion 323. During the mounting, transportation, and use of the photovoltaic module 300, when the photovoltaic module 300 is subjected to a force along the third direction Z (that is, the photovoltaic module 300 is under tension or compression), the first portion 321 can deform synchronously with the laminate 310, and the second portion 322 and the third portion 323 can also deform with the first portion 321, that is, the force acting on the frame 320 is counteracted by the deformation of the first portion 321, the second portion 322, and the third portion 323, thereby reducing a risk of damages to the frame 320, prolonging the service life of the frame 320, and improving operational stability of the frame 320. Further, along the first direction X, the second portion 322 and the third portion 323 are respectively arranged at two ends of the first portion 321, so that a cross section of the frame 320 is in an inverted U shape, and a local load on the first portion 321 can be transferred to the second portion 322 and the third portion 323 on two sides along the first direction X, which prevents stress concentration, thereby improving structural stability of the frame 320 and improving rigidity and stability of the photovoltaic module 300.

In an embodiment, a width of the first portion 321 is W1, and 10 mm≤W1≤20 mm. W1 may be, for example, 10 mm, 10.5 mm, 12 mm, 13.5 mm, 14 mm, 15.5 mm, 16 mm, 17.5 mm, 18 mm, 19.5 mm, or 20 mm, or may be other values in the above range, which is not limited in the present disclosure.

If W1 is excessively small (e.g., less than 10 mm), the width of the first portion 321 may be excessively narrow, resulting in an excessively small area of contact between the frame 320 and the laminate 310, which affects the supporting effect of the frame 320 on the laminate 310. As a result, the rigidity of the photovoltaic module 300 cannot be highly improved. If W1 is excessively large (e.g., greater than 20 mm), the width of the first portion 321 may be excessively wide, which may waste materials and increase costs of the frame 320 without further improving the supporting effect of the frame 320, and may also increase a weight of the frame 320, affecting a lightweight effect of the photovoltaic module 300. Therefore, when the dimension W1 of the first portion 321 ranges from 10 mm to 20 mm, it can be ensured that the frame 320 provides reliable support for the laminate 310, thereby improving rigidity and structural stability of the photovoltaic module 300. At the same time, the weight of the frame 320 can also be appropriately reduced, and manufacturing costs of the photovoltaic module 300 can be reduced.

As shown in FIG. 12, the first portion 321 and the laminate 310 are bonded and fixed by the connecting adhesive 330. When the frame 320 is mounted on the back surface 3102, the connecting adhesive 330 is applied to the first portion 321 first, and then the frame 320 is bonded to the back surface 3102 of the laminate 310 through the connecting adhesive 330. After the above bonding step, in order to improve reliability of the adhesive connection, a tool is generally used to press the laminate 310 and the frame 320 along the third direction Z to ensure that a connection area between the first portion 321 and the backlight surface 3102 is large enough. However, during the pressing, the connecting adhesive 330 may overflow from the first portion 321, resulting in an insufficient thickness of the connecting adhesive 330 remaining between the first portion 321 and the back surface 3102 and a reduction in an adhesion effect, thereby affecting reliability of the connection between the laminate 310 and the frame 320.

In order to solve the above problem, in the present disclosure, an accommodating groove 321C is arranged on the first portion 321 and configured to accommodate the connecting adhesive 330. As shown in FIG. 12 and FIG. 13, along the third direction Z, at least part of the first portion 321 is recessed in a direction away from the photovoltaic module 300 to form the accommodating groove 321C. The accommodating groove 321C is configured to accommodate at least part of the connecting adhesive 330.

In this embodiment, the accommodating groove 321C is formed on the first surface 321A of the first portion 321. When the frame 320 is mounted on the back surface 3102, the accommodating groove 321C may be first filled with the connecting adhesive 330, then the frame 320 is bonded to the back surface 3102 of the laminate 310 through the connecting adhesive 330, and finally, the laminate 310 and the frame 320 are pressed along the third direction Z by a tool. Since the accommodating groove 321C is filled with the connecting adhesive 330, even if part of the connecting adhesive 330 is extruded out of the first surface 321A of the first portion 321, there is still enough connecting adhesive 330 in the accommodating groove 321C. The part of the connecting adhesive 330 in the accommodating groove 321C can be stably connected to the back surface 3102, thereby improving reliability of the connection between the frame 320 and the laminate 310.

For example, as shown in FIG. 13, along the third direction Z, a depth H1 of the accommodating groove 321C ranges from 1 mm to 2 mm. For example, H1 may be 1 mm, 1.05 mm, 1.2 mm, 1.35 mm, 1.4 mm, 1.5 mm, 1.65 mm, 1.7 mm, 1.85 mm, 1.9 mm, or 2 mm, or may be other values in the above range, which is not limited in the present disclosure.

If H1 is excessively small (e.g., less than 1 mm), a depth of the accommodating groove 321C is excessively small, and the thickness of the connecting adhesive 330 located in the accommodating groove 321C is excessively small, which may affect reliability of adhesion between the frame 320 and the laminate 310, resulting in a reduction in structural stability of the photovoltaic module 300. If H1 is excessively large (e.g., greater than 2 mm), the depth of the accommodating groove 321C is excessively large, which may lead to a waste of the connecting adhesive 330 and may not significantly improve stability of the connection between the frame 320 and the laminate 310. Therefore, when the depth H1 of the accommodating groove 321C ranges from 1 mm to 2 mm, a stable connection between the frame 320 and the laminate 310 can be ensured, and the cost of the photovoltaic module 300 can be appropriately reduced.

As shown in FIG. 13, along the first direction X, a width W2 of the accommodating groove 321C ranges from 4 mm to 12 mm. For example, W2 may be 4 mm, 5 mm, 6.5 mm, 7 mm, 8 mm, 9.5 mm, 10 mm, 11.5 mm, 12 mm, or may be other values in the above range, which is not limited in the present disclosure.

If W2 is excessively small (e.g., less than 4 mm), a width of the accommodating groove 321C is excessively small, leading to an excessively small connection area between the connecting adhesive 330 in the accommodating groove 321C and the laminate 310, which may affect reliability of adhesion between the frame 320 and the laminate 310, resulting in a reduction in structural stability of the photovoltaic module 300. If W2 is excessively large (e.g., greater than 12 mm), the width of the accommodating groove 321C is excessively large, and a large amount of the connecting adhesive 330 is required when the thickness of the connecting adhesive 330 meets a machining requirement, which may lead to a waste of the connecting adhesive 330 and may not significantly improve stability of the connection between the frame 320 and the laminate 310. Therefore, when the width W1 of the accommodating groove 321C ranges from 4 mm to 12 mm, the stable connection between the frame 320 and the laminate 310 can be ensured, and the cost of the photovoltaic module 300 can be appropriately reduced.

In addition, as shown in FIG. 13, the accommodating groove 321C has a sidewall and a bottom wall. The sidewall extends, in a direction away from a center of the accommodating groove, from the bottom wall, that is, the sidewall is inclined. The sidewall can hinder the flow of the connecting adhesive 330 to some extent, reduce a possibility of overflow of the connecting adhesive 330 from the first portion 321, and improve stability of the connection between the frame 320 and the laminate 310.

In the above structure, as shown in FIG. 12, for the connecting adhesive 330, along the third direction Z, a thickness H2 of the connecting adhesive 330 between the laminate 310 and the bottom wall of the accommodating groove 321C ranges from 2 mm to 4 mm, which may be, for example, 2 mm, 2.1 mm, 2.2 mm, 2.5 mm, 2.6 mm, 2.8 mm, 3 mm, 3.1 mm, 3.3 mm, 3.5 mm, 3.7 mm, 3.9 mm, or 4 mm, or may be other values in the above range, and is not limited in the present disclosure.

If H2 is excessively small (e.g., less than 2 mm), when the depth H1 of the accommodating groove 321C is fixed, the excessively small H2 means that a thickness of a part of the connecting adhesive 330 between the laminate 310 and the first surface 321A is small, which is not conducive to the stable connection between the laminate 310 and the frame 320. If H2 is excessively large (e.g., greater than 4 mm), when the depth H1 of the accommodating groove 321C is fixed, the excessively large H2 means that the thickness of the part of the connecting adhesive 330 between the laminate 310 and the first surface 321A is large, which may affect mounting difficulty and mounting efficiency of the frame 320 and the laminate 310, and may also cause a waste of the connecting adhesive 330. Therefore, when H2 ranges from 2 mm to 4 mm, the stable connection between the frame 320 and the laminate 310 can be ensured, the cost of the photovoltaic module 300 can be appropriately reduced, and manufacturing efficiency of the photovoltaic module 300 can be improved.

As shown in FIG. 14, in order to adapt to a size of the laminate 310 and ensure stability of bonding between the laminate 310 and the frame 320, two or more accommodating grooves 321C may be provided to accommodate a larger amount of the connecting adhesive 330. A width of a connecting rib between two adjacent accommodating grooves 321C ranges from 6 mm to 15 mm to ensure that structural strength of the frame 320 is not affected. For example, the width may be 6 mm, 7 mm, 8 mm, 9 mm, 10 mm, 11 mm, 12 mm, 13 mm, 14 mm, or 15 mm, or may be other values in the above range, which is not limited in the present disclosure.

Since an edge of the laminate 310 is relatively fragile and is easy to break under a force, the frame 320 is required to support an entire edge region of the laminate 310. As shown in FIG. 11, the frame 320 includes two first frames 3201 and two second frames 3202, and the first frames 3201 and the second frames 3202 each include the first portion 321, the second portion 322, and the third portion 323. That is, cross-sectional structures of the first frames 3201 and the second frames 3202 are the structures described in the above embodiments.

For example, the first frames 3201 extend along the second direction Y, the second frames 3202 extend along the first direction X, and the two first frames 3201 are fixedly connected to the two second frames 3202 respectively, so that the frame 320 forms a rectangular structure.

In this embodiment, the two first frames 3201 and the two second frames 3202 are sequentially connected and fixed end to end to form the rectangular frame 320 matching the size of the laminate 310, thereby improving structural strength of edges of the laminate 310, so that when the photovoltaic module 300 is subjected to a force along the third direction Z, an edge part thereof is not easily damaged, thereby improving stability and prolonging the service life of the photovoltaic module 300.

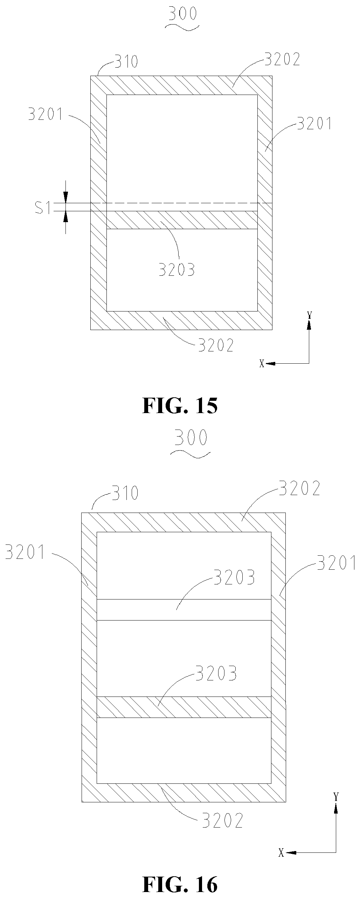

Further, as shown in FIG. 15 and FIG. 16, the frame 320 further includes at least one reinforcing frame 3203, and the reinforcing frame 3203 includes the first portion 321, the second portion 322, and the third portion 323. Along the first direction X, two ends of the reinforcing frame 3203 are fixedly connected to the first frames 3201 respectively, and along the second direction Y, the reinforcing frame 3203 is arranged between the two second frames 3202.

In order to further enhance a supporting force of the frame 320, the frame 320 may include at least one reinforcing frame 3203, and the reinforcing frame 3203 includes the first portion 321, the second portion 322, and the third portion 323. That is, a cross-sectional structure of the reinforcing frame 3203 is the structure described in the above embodiments. The reinforcing frame 3203 extends in a same direction as the second frame 3202, and two ends thereof along the first direction X are respectively fixedly connected to the two first frames 3201 to improve structural stability of the frame 320.

When the photovoltaic module 300 is subjected to a force along the third direction Z, the reinforcing frame 3203 can transfer a local load of the laminate 310 to two ends of the laminate 310 along the first direction X, which increases a stress area of the laminate 310, thereby reducing a load of the laminate 310 per unit area and preventing damages to the laminate 310 due to stress concentration. Therefore, the arrangement of the reinforcing frame 3203 can improve trampling resistance and wind resistance of the photovoltaic module 300.

A specific number of the reinforcing frame 3203 is not limited in this embodiment, which may be designed according to a stress condition and a mounting environment of the photovoltaic module 300. Some embodiments are listed below.

In some embodiments, as shown in FIG. 15, one reinforcing frame 3203 is provided, and along the second direction Y, a distance between the reinforcing frame 3203 and a midpoint of the first frame 3201 is S1, and 20 mm≤S1≤40 mm. For example, S1 may be 20 mm, 21 mm, 23 mm, 25 mm, 26 mm, 28 mm, 30 mm, 32 mm, 34 mm, 35 mm, 37 mm, 39mm, or 40 mm, or may be other values in the above range, which is not limited in the present disclosure.

In this embodiment, an overall structure of the frame 320 is in a 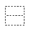 shape. In order to ensure that the force is evenly distributed on the laminate 310, the reinforcing frame 3203 should be arranged at a midpoint position of the first frame 3201. However, since a junction box of the photovoltaic module 300 is generally arranged on a back surface of the laminate 310 and is at a central position in the second direction Y, when mounted, the reinforcing frame 3203 is positioned by a certain distance relative to the midpoint of the first frame 3201 to avoid the junction box. S1 is a distance between the reinforcing frame 3203 and the midpoint. When S1 ranges from 20 mm to 40 mm, interference between the reinforcing frame 3203 and the junction box can be prevented, and a uniform force on all parts of the photovoltaic module 300 can be ensured.

In some other embodiments, as shown in FIG. 16, two reinforcing frames 3203 are provided, and an overall structure of the frame 320 is in a stair/ladder shape. In order to ensure even distribution of the force on the laminate 310, the two reinforcing frames 3203 are respectively arranged at three equal points of the first frame 3201.

For a connection structure between the components of the frame 320, the present disclosure also provides the following embodiments.

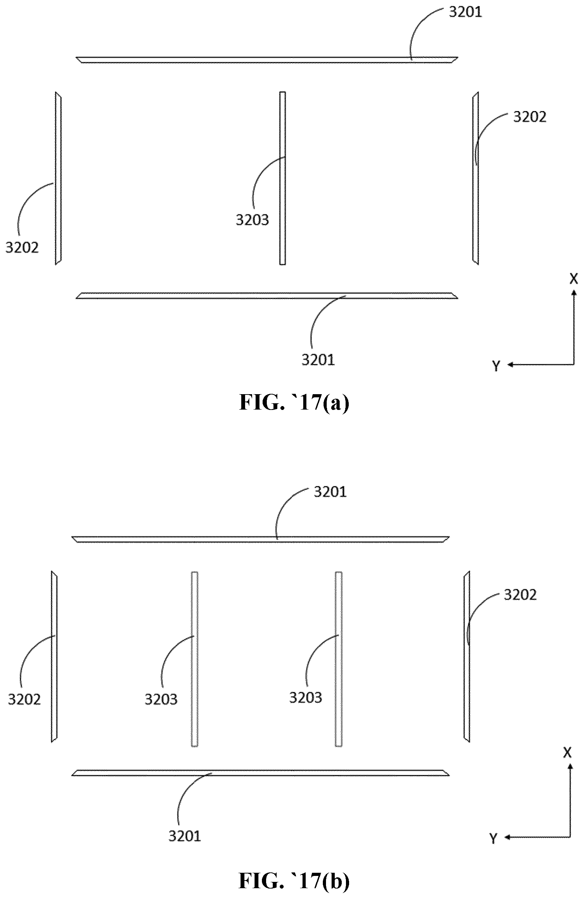

In some embodiments, as shown in FIG. 17(a) and FIG. 17(b), the first frame 3201, the second frame 3202, and the reinforcing frame 3203 are independent structures, and each of the three is an integral structure formed into one piece. The first frame 3201 and the second frame 3202 as well as the first frame 3201 and the reinforcing frame 3203 are fixedly connected by welding.

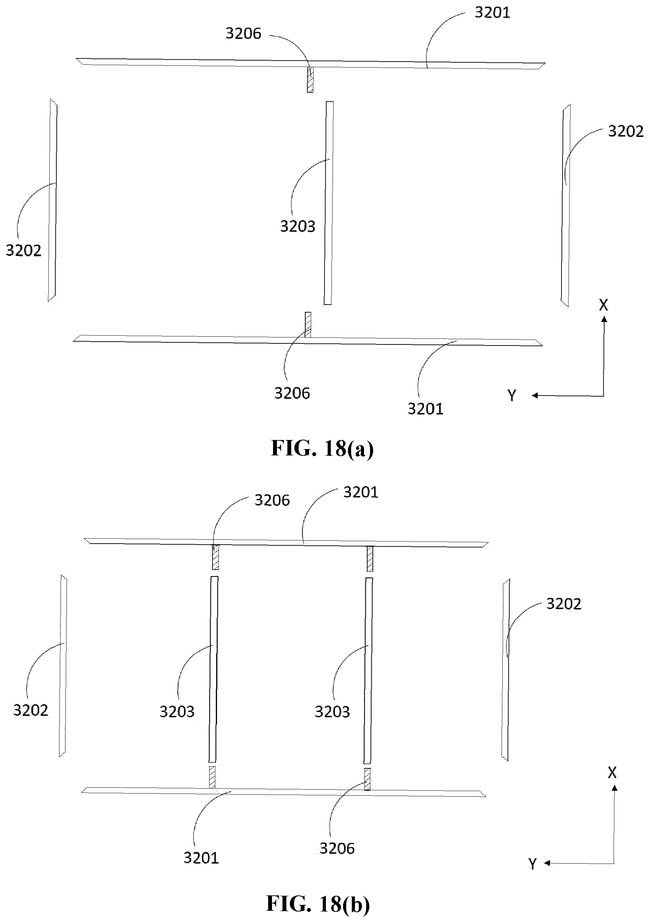

In some embodiments, as shown in FIG. 18(a) and FIG. 18(b), the first frame 3201, the second frame 3202, and the reinforcing frame 3203 are independent structures, and each of the three is an integral structure formed into one piece. The frame 320 further includes insertion rods 3206. Each first frame 3201 is connected to, such as by welding, multiple insertion rods 3206 having a same quantity as the reinforcing frames 3203. The two first frames 3201 are respectively fixedly connected to two ends of the reinforcing frame 3203 along the first direction X through the insertion rods 3206. For example, a first end of the insertion rod is connected to the first frame 3201, and the insertion rod is inserted into a cavity of the reinforcing frame 3203. The first frame 3201 and the second frame 3202 are fixedly connected by welding.

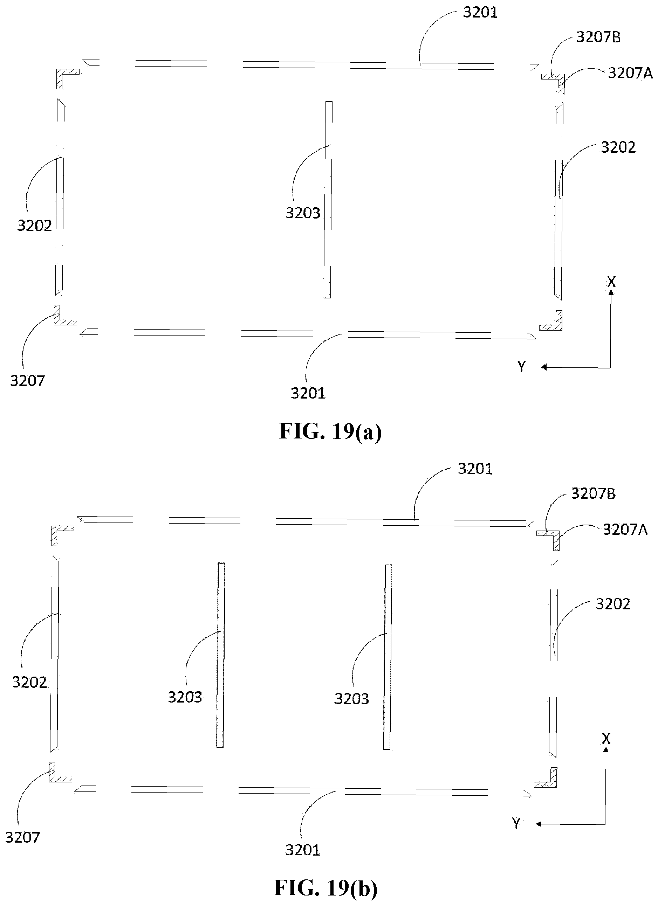

In some embodiments, as shown in FIG. 19(a) and FIG. 19(b), the first frame 3201, the second frame 3202, and the reinforcing frame 3203 are independent structures, and each of the three is an integral structure formed into one piece. The frame 320 further includes connecting members 3207, and the connecting member 3207 includes a first section 3207A extending along the first direction X and a second section 3207B extending along the second direction Y. The first section 3207A is configured to be in insertion fit with the second frame 3202, and the second section 3207B is configured to be in insertion fit with the adjacent first frame 3201, so that the first frame 3201 and the second frame 3202 are fixedly connected through the connecting member 3207. The first frame 3201 and the reinforcing frame 3203 are fixedly connected by welding.

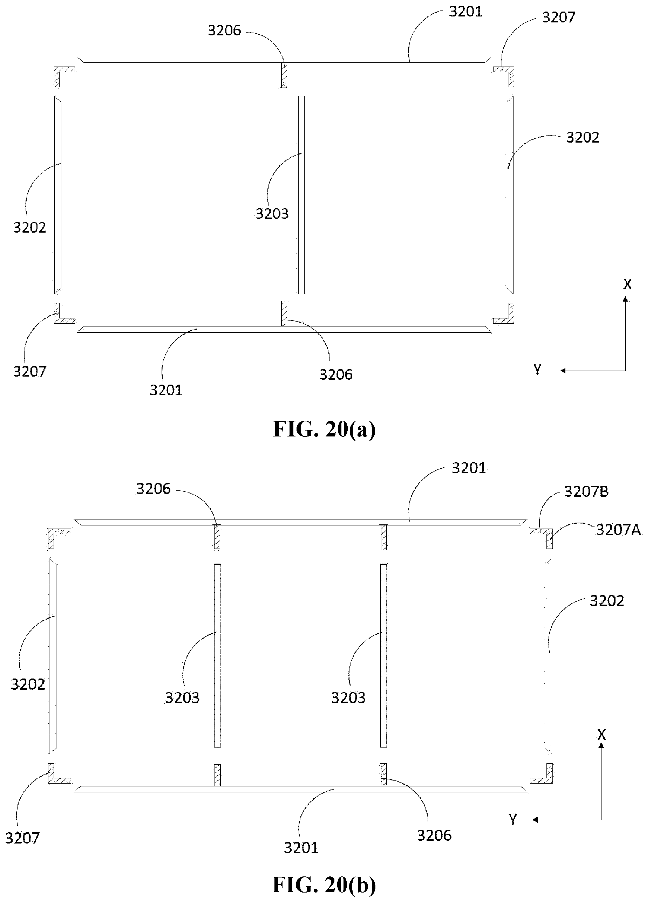

In some embodiments, as shown in FIG. 20(a) and FIG. 20(b), the first frame 3201, the second frame 3202, and the reinforcing frame 3203 are independent structures, and each of the three is an integral structure formed into one piece. The frame 320 further includes insertion rods 3206 and connecting members 3207, and the connecting member 3207 includes a first section 3207A extending along the first direction X and a second section 3207B extending along the second direction Y. The first section 3207A is configured to be in insertion fit with the second frame 3202, and the second section 3207B is configured to be in insertion fit with the adjacent first frame 3201, so that the first frame 3201 and the second frame 3202 are fixedly connected through the connecting member 3207. A same number of insertion rods 3206 as the reinforcing frame 3203 are welded on each first frame 3201, the two first frames 3201 are respectively fixedly connected to two ends of the reinforcing frame 3203 along the first direction X through the insertion rods 3206.

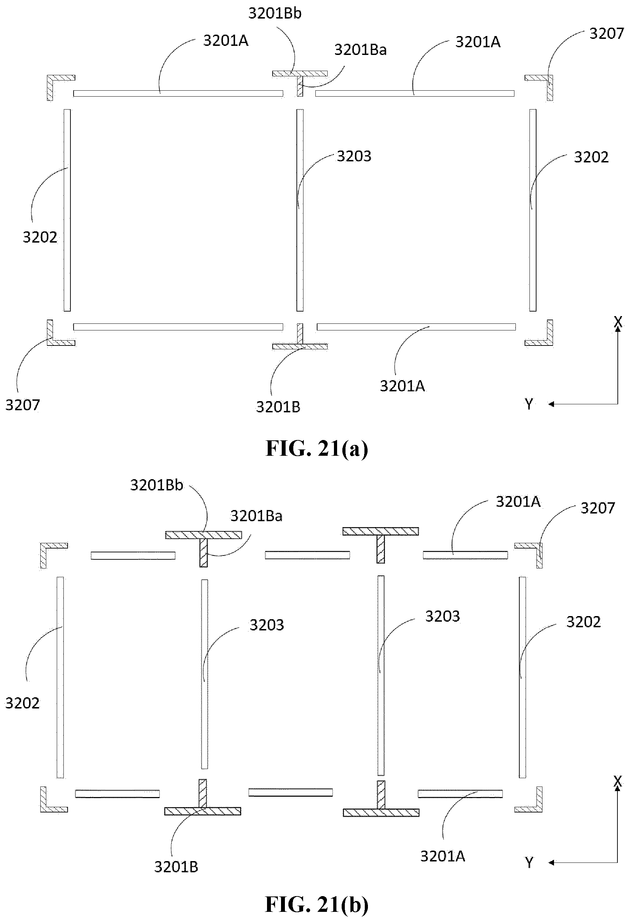

In some embodiments, as shown in FIG. 21(a) and FIG. 21(b), the first frame 3201, the second frame 3202, and the reinforcing frame 3203 are independent structures. Each of the second frame 3202 and the reinforcing frame 3203 is an integral structure formed into one piece. The first frame 3201 includes a plurality of first frame segments 3201A and a plurality of inserts 3201B. The inserts 3201B each have a T-shaped structure, including a third section 3201Ba extending along the first direction X and a fourth section 3201Bb extending along the second direction Y. Along the second direction Y, two ends of the fourth section 3201Bb are in insertion fit with two first frame segments 3201A adjacent thereto to form a complete first frame 3201. The third section 3201Ba is configured to be in insertion fit with the reinforcing frame 3203. The two first frames 3201 are respectively fixedly connected to the two ends of the reinforcing frame 3203 along the first direction X through the third sections 3201Ba. A number of inserts 3201B included in each first frame 3201 is greater than or equal to that of reinforcing frames 3203 of the frame 320. The frame 320 further includes connecting members 3207, and the connecting member 3207 includes a first section 3207A extending along the first direction X and a second section 3207B extending along the second direction Y. The first section 3207A is configured to be in insertion fit with the second frame 3202, and the second section 3207B is configured to be in insertion fit with the adjacent first frame 3201, so that the first frame 3201 and the second frame 3202 are fixedly connected through the connecting member 3207.

To sum up, the first frame 3201, the second frame 3202, and the reinforcing frame 3203 of the frame 320 may be fixedly connected by welding, inserting, or a combination of welding and inserting. In addition, as shown in FIG. 17(a) and FIG. 17(b), two ends of the first frame 3201 along the second direction Y and two ends of the second frame 3202 along the first direction X may be beveled to ensure that the end shape of the first frame 3201 and the end shape of the second frame 3202 match each other, and a sealed connection can be formed between the first frame 3201 and the second frame.

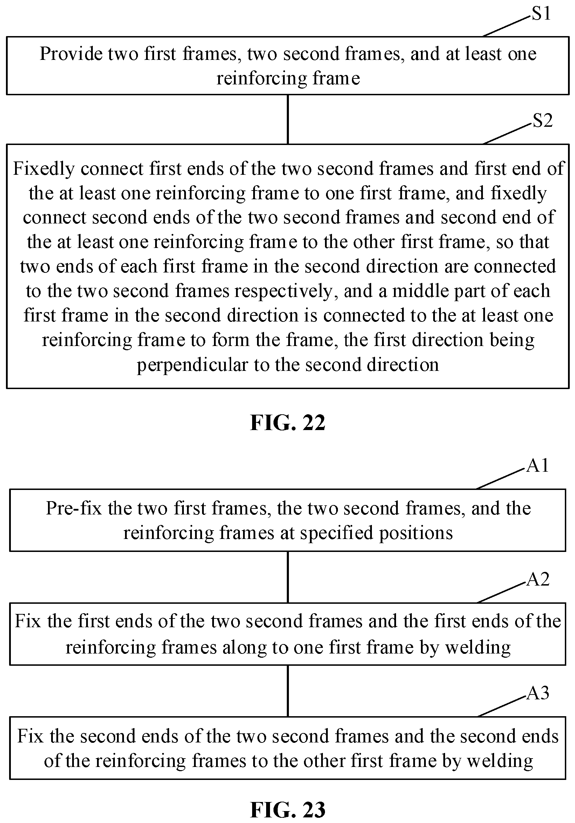

Embodiments of the method of manufacturing a frame 320 including a reinforcing frame 3203 are described below. As shown in FIG. 22, the assembly method includes the following steps.

In step S1, two first frames 3201, two second frames 3202, and at least one reinforcing frame 3203 are provided.

In step S2, first ends of the two second frames 3202 and first ends of all the reinforcing frames 3203 along the first direction X are fixedly connected to one first frame 3201, and second ends of the two second frames 3202 and second ends of all the reinforcing frames 3203 along the first direction X are fixedly connected to the other first frame 3201, so that two ends of each first frame 3201 in the second direction Y are connected to the two second frames 3202 respectively, and a middle part of each first frame 3201 in the second direction Y is connected to the reinforcing frame 3203 to form the frame 320. The first ends of the two second frames 3202 and the first ends of all the reinforcing frames 3203 are positioned on a side of the first direction X, and the second ends of the two second frames 3202 and the second ends of all the reinforcing frames 3203 are positioned on the opposite side of the first direction X.

The assembly according to the above steps enables the two first frames 3021 and the two second frames 3202 to be assembled into a rectangular structure with stable edges. At the same time, at least one reinforcing frame 3203 is arranged in the middle of the rectangular structure, which can further enhance rigidity and strength of the frame 320. The first frame 3201, the second frame 3202, and the reinforcing frame 3203 are all fixedly connected, which reduces a possibility of loosening, ensures structural stability of the frame 320, and improves a capability of the frame 320 to resist deformation, thereby improving a supporting force of the frame 320 on the laminate 310. Moreover, the first frame 3201, the second frame 3202, and the reinforcing frame 3203 are assembled into an integral frame 320 through the above method, which also facilitates the subsequent connection with the laminate 310. Just by coating glue to the frame 320 or the laminate 310, a fixed connection between the frame 320 and the laminate 310 is achieved. Compared with the manner of bonding the first frame 3201, the second frame 3202, and the reinforcing frame 3203 to the laminate 310 one by one, the integral frame 320 takes less time to connect to the laminate 310 and requires lower accuracy in dimensional matching, which improves assembly efficiency of the photovoltaic module 300.

This assembly method does not limit the number of the reinforcing frame 3203. As shown in FIG. 17(a) and FIG. 17(b), two structures of the frame 320 are shown in this embodiment. As shown in FIG. 17(a), if one reinforcing frame 3203 is provided, when a middle part of the first frame 3201 in the second direction Y is connected to the reinforcing frame 3203, it should be ensured that a distance between the reinforcing frame 3203 and a midpoint of the first frame 3201 in the second direction Y should be maintained within 20 mm to 30 mm, so as to prevent interference of the reinforcing frame 3203 with the junction box on the laminate 30 when the frame 320 is mounted on the laminate 310. At the same time, it can also be ensured that the photovoltaic module 300 provided with the frame 320 is evenly stressed at all parts. As shown in FIG. 17(b), if two reinforcing frames 3203 are provided, when a middle part of the first frame 3201 in the second direction Y is connected to the reinforcing frames 3203, it should be ensured that the two reinforcing frames 3203 are respectively fixedly connected to three equal points of the first frame 3201 in the second direction Y, to ensure that the photovoltaic module 300 provided with the frame 320 is evenly stressed at all parts. By analogy, when more than two reinforcing frames 3203 are provided, a specific connection position with the first frame 3201 should be set in consideration of a stress condition of the photovoltaic module 300.

In addition, as shown in FIG. 17(a), prior to step S2, two ends of the first frame 3201 along the second direction Y and two ends of the second frame 3202 along the first direction X may be beveled to ensure that shapes of the first frame 3201 and the second frame 3202 match and a sealed connection can be formed between the first frame 3201 and the second frame 3202.

It is to be noted that, in this embodiment, the first direction X is perpendicular to the second direction Y, the first direction X is a width direction X of the photovoltaic module 300, and the second direction Y is a length direction Y of the photovoltaic module 300.

In an embodiment, for step S2, as shown in FIG. 23, the assembly method includes the following steps.

In step A1, the two first frames 3201, the two second frames 3202, and all the reinforcing frames 3203 are pre-fixed at specified positions.

In step A2, the first ends of the two second frames 3202 and the first ends of all the reinforcing frames 3203 along the first direction X are fixed to one first frame 3201 by welding.

In step A3, the second ends of the two second frames 3202 and the second ends of all the reinforcing frames 3203 along the first direction X are fixed to the other first frame 3201 by welding.

In the above steps, the first frame 3201 is fixedly connected to the second frames 3202 and the reinforcing frame 3203 by welding, and connection strength is high. For step A1, the two first frames 3201, the two second frames 3202, and all the reinforcing frames 3203 may be pre-fixed by a framing machine or other tools, to achieve positioning to facilitate subsequent welding and improve welding accuracy of the frame 320. For step A2 and step A3, first ends of the two second frames 3202 and all the reinforcing frames 3203 are first fixed to one first frame 3201, that is, first ends of the two second frames 3202 and all the reinforcing frames 3203 are positioned first, which also improves the welding accuracy of the frame 320. Moreover, during the welding in step A2 and step A3, the second frames 3202 and the reinforcing frame 3203 may be sequentially welded in the second direction Y from one end of the first frame 3201 to the other end. In this way, a moving path during the welding can be shortened regardless of manual welding or automatic machine welding, which improves assembly efficiency of the frame 320.

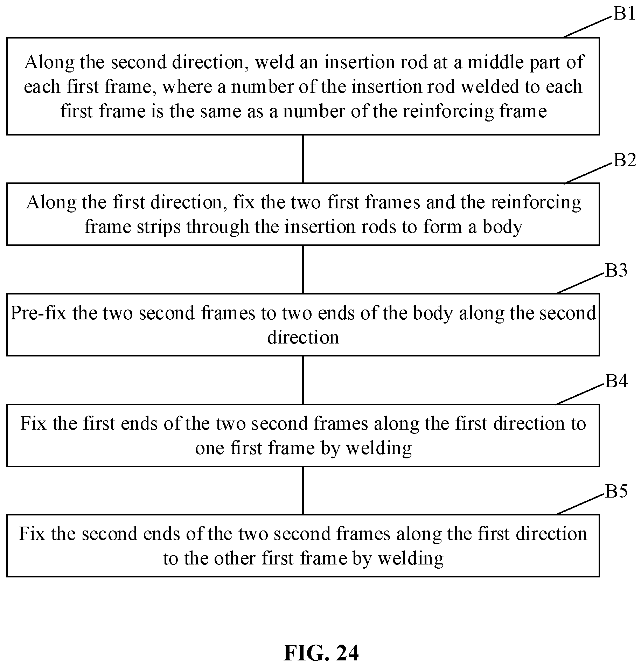

In another embodiment, as shown in FIG. 18(a) and FIG. 18(b), the frame 320 further includes insertion rods 3206. For step S2, as shown in FIG. 24, the assembly method includes the following steps.

In step B1, along the second direction Y, a middle part of each first frame 3201 is welded with an insertion rod 3206, where a number of the insertion rod 3206 welded to each first frame 3201 is the same as a number of the reinforcing frame 3203.

In this embodiment, the reinforcing frame 3203 is fixedly connected to the first frame 3201 through the insertion rod 3206. Therefore, a specific number of the insertion rod 3206 of each first frame 3201 should be equal to that of the reinforcing frame 3203. Moreover, a welding position of the insertion rod 3206 on the first frame 3201 should correspond to a mounting position of the reinforcing frame 3203 on the first frame 3201, so as to ensure that the photovoltaic module 300 is evenly stressed at all parts after the frame 320 is mounted on the laminate 310. In this step, the insertion rod 3206 and the first frame 3201 may be pre-fixed and then welded.

In step B2, along the first direction X, the two first frames 3201 and all the reinforcing frames 3203 are fixed through the insertion rods 3206 to form a body.

In this step, two ends of each reinforcing frame 3203 along the first direction X are fixedly connected to the insertion rods 3206 on the two first frames 3201 respectively. Since positions of the insertion rods 3206 have been determined, it is relatively convenient to connect the reinforcing frame 3203 and the insertion rods 3206.

In step B3, the two second frames 3202 are pre-fixed to two ends of the body along the second direction Y.

In this embodiment, the frame 320 is assembled by insertion and welding. In this step, the two second frames 3202 may be pre-fixed by a framing machine or other tools, to achieve positioning to facilitate subsequent welding of the second frame 3202 and the first frame 3201 and improve welding accuracy of the frame 320.

In step B4, the first ends of the two second frames 3202 along the first direction X are welded and fixed to one first frame 3201.

In step B5, the second ends of the two second frames 3202 along the first direction X are welded and fixed to the other first frame 3201.

For step B4 and step B5, the first ends of the two second frames 3202 are first fixed to one first frame 3201, that is, the first ends of the two second frames 3202 are positioned first, which also improves the welding accuracy of the frame 320. Moreover, during the welding in step B4 and step B5, the two second frames 3202 may be sequentially welded from one end of the first frame 3201 to the other end in the second direction Y. In this way, a moving path during the welding can be shortened by either manual welding or automatic machine welding, which improves assembly efficiency of the frame 320.

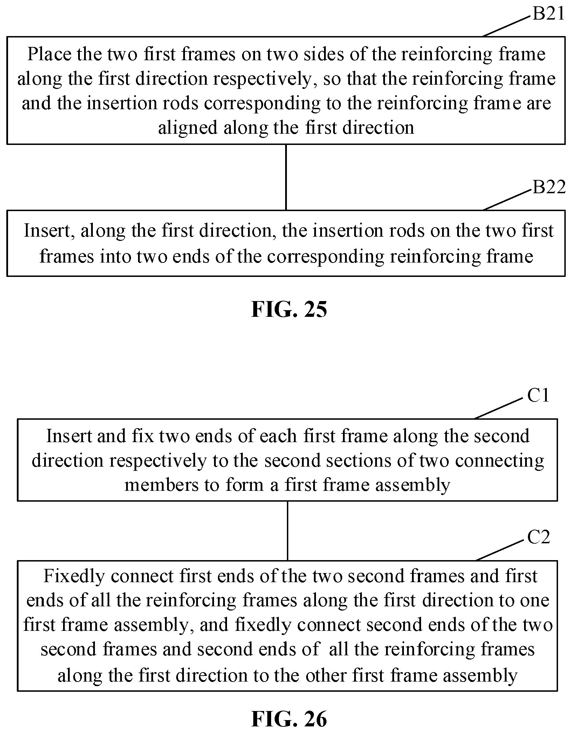

In an embodiment, as shown in FIG. 25, for step B2, the assembly method includes the following steps.

In step B21, the two first frames 3201 are placed on two sides of the reinforcing frame 3203 along the first direction X respectively, so that the reinforcing frame 3203 and the insertion rods 3206 corresponding to the reinforcing frame 3203 are aligned along the first direction X.

In step B22, the insertion rods 3206 on the two first frames 3201 are inserted into two ends of the corresponding reinforcing 3203 along the first direction X.

For example, all the reinforcing frames 3203 may be fixed at preset positions along the second direction Y, and the two first frames 3201 are then placed on two sides of the reinforcing frames 3203 along the first direction X, ensuring that the reinforcing frame 3203 and the insertion rods 3206 corresponding to the reinforcing frame 3203 along the first direction X. Then, the two first frames 3201 are simultaneously moved towards each other so that the insertion rods 3206 are inserted into two ends of the reinforcing frame 3203. That is, the two first frames 3201 and the reinforcing frames 3203 are fixed in one step. Especially when the frame 320 includes a plurality of reinforcing frames 3203, the assembly time can be greatly saved and the assembly efficiency of the frame 320 can be improved.

In another embodiment, as shown in FIG. 19(a) and FIG. 19(b), the frame 320 further includes a connecting member 3207, and the connecting member 3207 includes a first section 3207A extending along the first direction X and a second section 3207B extending along the second direction Y. For step S2, as shown in FIG. 26, the assembly method includes the following steps.

In step C1, two ends of each first frame 3201 along the second direction Y are respectively inserted into and fixed to the second sections 3207B of two connecting members 3207 to form a first frame assembly. Two first frames 3201 form two first frame assemblies.

In step C2, first ends of the two second frames 3202 and first ends of all the reinforcing frames 3203 along the first direction X are fixedly connected to one first frame assembly, and the second ends of the two second frames 3202 and the second ends of all the reinforcing frames 3203 along the first direction X are fixedly connected to the other first frame assembly.

In the above steps, the first frame 3201 and the second frame 3202 are fixedly connected through the connecting member 3207. First, the connecting members 3207 are fixed to two ends of the first frame 3201 along the second direction Y to facilitate the subsequent connection of the second frame 3202 and the first frame 3201.

Regarding the method of fixedly connecting the first frame 3201 and the second frame 3202 through the connecting member 3207, the present disclosure also provides the following embodiments to realize fixation of the reinforcing frame 3203 and the first frame 3201.

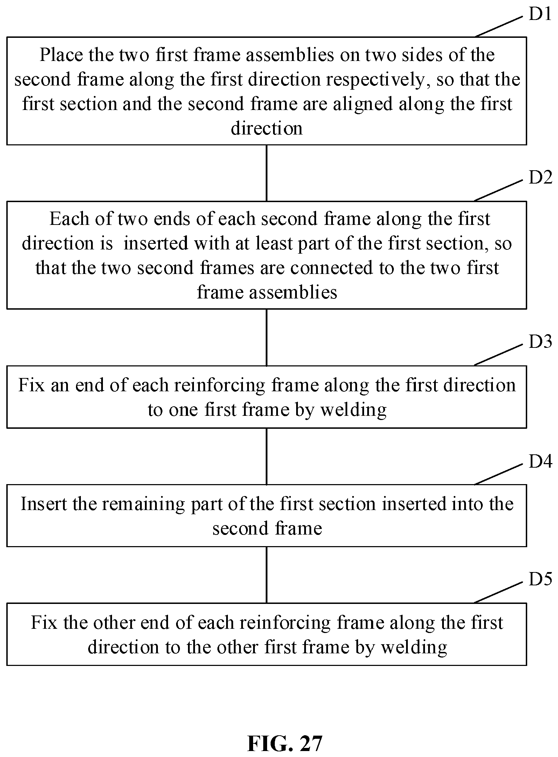

In an embodiment, as shown in FIG. 27, for step C2, the assembly method includes the following steps.

In step D1, the two first frame assemblies are placed on two sides of the second frame 3202 along the first direction X respectively, so that the first section 3207A and the second frame 3202 are aligned along the first direction X.

In step D2, each of the two ends of each second frame 3202 along the first direction X is inserted with at least part of the first section 3207A, so that the two second frames 3202 are connected to the two first frame assemblies.

In step D1 and step D2 above, the two second frames 3202 are connected to the two first frame assemblies, but the first section 3207A of the connecting member is not completely inserted into the second frame 3202 to reserve a certain space in the first direction X for the mounting of the reinforcing frame 3203. The two second frames 3202 may be inserted into the first frame assemblies at the same time, or may be inserted into the first frame assemblies in sequence, which is not limited in this embodiment.

In step D3, one end of each reinforcing frame 3203 along the first direction X is welded and fixed to one first frame 3201.

This step can realize positioning and connections between all the reinforcing frames 3203 and one first frame 3201, which improves welding accuracy of the frame 320. When the number of the reinforcing frame 3203 is greater than or equal to 2, each reinforcing frame 3203 may be pre-fixed at a corresponding position. Then, a plurality of reinforcing frames 3203 are sequentially welded in the second direction Y from the end of the first frame 3201 to the other end, which improves assembly accuracy and assembly efficiency of the frame 320.

In step D4, the remaining part of the first section 3207A is all inserted into the second frame 3202.

In this step, the remaining part of the first section 3207A is continuously pushed into the second frame 3202 to achieve a sealed and fixed connection between the first frame 3201 and the second frame 3202.

In step D5, the other end of each reinforcing frame 3203 along the first direction X is welded and fixed to the other first frame 3201.

In this step, after each reinforcing frame 3203 is welded and fixed to the other first frame 3201, the assembly step of the frame 320 is completed, and a stable connection of the reinforcing frame 3203, the second frame 3202, and the first frame 3201 is achieved.

In step D2 above, the first frame 3201 and the second frame 3202 are pre-connected rather than fixed in one step, which provides a certain adjustable space for the subsequent mounting process of the reinforcing frame 3203, making it more operable and improving a yield rate of the frame 320.

In another embodiment, as shown in FIG. 20(a) and FIG. 20(b), the frame 320 further includes insertion rods 3206. Prior to or subsequent to step C1, the assembly method further includes: along the second direction Y, welding a same number of insertion rods 3206 as the reinforcing frames 3203 at middle parts of the two first frames 3201 respectively.

In this embodiment, the reinforcing frame 3203 is fixedly connected to the first frame 3201 through the insertion rod 3206. Therefore, a specific number of the insertion rod 3206 of each first frame 3201 is equal to that of the reinforcing frame 3203. Moreover, a welding position of the insertion rod 3206 on the first frame 3201 should correspond to a mounting position of the reinforcing frame 3203 on the first frame 3201, so as to ensure that the photovoltaic module 300 is evenly stressed at all parts after the frame 320 is mounted on the laminate 310. In this step, the insertion rod 3206 and the first frame 3201 may be pre-fixed and then welded.

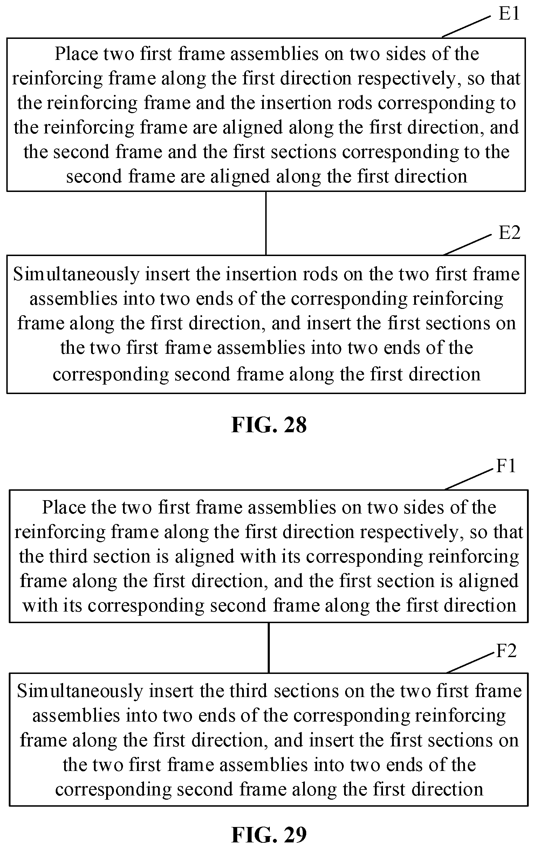

For step C2, as shown in FIG. 28, the assembly method includes the following steps.

In step E1, the two first frame assemblies are placed on two sides of the reinforcing frame 3203 along the first direction X respectively, so that the reinforcing frame 3203 and the insertion rods 3206 corresponding to the reinforcing frame 3203 are aligned along the first direction X, and the second frame 3202 and the first sections 3207A corresponding to the second frame 3202 are aligned along the first direction X.

In step E2, the insertion rods 3206 on the two first frame assemblies are simultaneously inserted into two ends of the corresponding reinforcing frame 3203 along the first direction X, and the first sections 3207A on the two first frame assemblies are inserted into two ends of the corresponding second frame 3202 along the first direction X.

In the above steps, the two second frames 3202 and all the reinforcing frames 3203 may be fixed at preset positions along the second direction Y, ensuring that all the insertion rods 3206 are aligned with their corresponding reinforcing frame 3203 along the first direction X and all the first sections 3207A are aligned with their corresponding second frames 3202 along the first direction X. Then, the two first frame assemblies are simultaneously moved towards each other so that the insertion rods 3206 are inserted into two ends of the reinforcing frames 3203. At the same time, the first sections 3207A are inserted into two ends of the second frames 3202. That is, fixation of the two first frames 3201 to the two second frames 3202 and the reinforcing frames 3203 is realized in one step. Especially when the frame 320 includes a plurality of reinforcing frames 3203, the assembly time can be greatly saved and the assembly efficiency of the frame 320 can be improved.

In another embodiment, as shown in FIG. 21(a) and FIG. 21(b), each first frame 3201 includes a plurality of first frame segments 3201A and a plurality of inserts 3201B, and the inserts 3201B each include a third section 3201Ba extending in the first direction X and a fourth section 3201Bb extending in the second direction Y. Prior to step C1, the assembly method further includes: forming the first frame 3201 according to the plurality of first frame segments 3201A through the plurality of inserts 3201B.

In this embodiment, the first frame segment 3201A and the insert 3201B have a split structure, and the plurality of first frame segments 3201A and the plurality of inserts 3201B are assembled to form the first frame 3201. The inserts 3201B each have a T-shaped structure, including a third section 3201Ba and a fourth section 3201Bb vertically connected. The first frame segment 3201A is fixedly connected to the fourth section 3201Bb of the insert 3201B, and two adjacent first frame segments 3201A along the second direction Y are respectively connected to two ends of the fourth section 3201Bb of a same insert 3201B. The third section 3201Ba of the insert 3201B is configured to be fixedly connected to the reinforcing frame 3203. Therefore, a number of inserts 3201B included in each first frame 3201 is greater than or equal to that of the reinforcing frames 3203 of the frame 320.

For step C2, as shown in FIG. 29, the assembly method includes the following steps.

In step F1, the two first frame assemblies are placed on two sides of the reinforcing frame 3203 along the first direction X respectively, so that the third sections 3201Ba are aligned with their corresponding reinforcing frames 3203 along the first direction X, and the first sections 3207A are aligned with their corresponding second frames 3202 along the first direction X.

In step F2, the third sections 3201Ba on the two first frame assemblies are simultaneously inserted into two ends of the corresponding reinforcing frame 3203 along the first direction X, and the first sections 3207A on the two first frame assemblies are inserted into two ends of the corresponding second frame 3202 along the first direction X.

In the above steps, the two second frames 3202 and all the reinforcing frames 3203 may be fixed at preset positions along the second direction Y, ensuring that the third sections 3201Ba of all the inserts 3201B are aligned with their corresponding reinforcing frame 3203 along the first direction X, and the first sections 3207A of all the connecting members 3207 are aligned with their corresponding second frame 3202 along the first direction X. Then, the two first frame assemblies are simultaneously moved towards each other so that the third sections 3201Ba are inserted into two ends of the reinforcing frames 3203. At the same time, the first sections 3207A are inserted into two ends of the second frames 3202. That is, fixation of the two first frames 3201 to the two second frames 3202 and the reinforcing frames 3203 is realized in one step. Especially when the frame 320 includes a plurality of reinforcing frames 3203, the assembly time can be greatly saved and the assembly efficiency of the frame 320 can be improved.

In this embodiment, the fixed connections between the first frame 3201, the second frame 3202, and the reinforcing frame 3203 are all achieved by insertion, so the formed frame 320 is detachable and separable later. If one of the first frame 3201, the second frame 3202, and the reinforcing frame 3203 is damaged, the damaged one may be replaced with a new one, which prolongs the service life of the frame 320 and reduces the cost of the photovoltaic module 300.

To sum up, assembling the frame 320 with the above assembly method improves assembly efficiency and a yield rate of the frame 320.

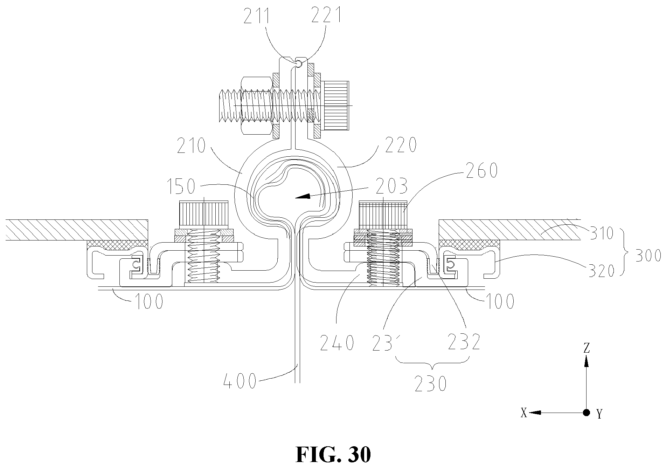

Some embodiments of the present disclosure further provide a photovoltaic facility. As shown in FIG. 30, the photovoltaic facility includes one or more color steel tiles 100, one or more clamps 200, and one or more photovoltaic modules 300. For example, a plurality of color steel tiles 100 are mounted on the ground or a main body of a building through a bracket 400. The photovoltaic module 300 is mounted on the color steel tile 100 through the clamp 200, to facilitate use of solar energy to generate electricity to meet daily use requirements. The main body of the building includes, but is not limited to, roofs and walls of buildings such as production enterprise factories and warehouses. In the present disclosure, a roof is taken as an example for illustration.

As shown in FIG. 30, the clamp 200 includes a clamping portion configured to clamp the color steel tile 100. The photovoltaic module 300 includes a laminate 310 and a frame 320. The frame 320 is fixed to a back surface of the laminate 310. The photovoltaic module 300 is fixedly connected to the clamp 200 through the frame 320.

The clamp 200 includes a first clamping portion 210 and a second clamping portion 220 arranged opposite to each other along the first direction X, with an accommodating cavity 203 formed between the first clamping portion 210 and the second clamping portion 220. The locking structure 150 is accommodated in the accommodating cavity 203 and is clamped by the first clamping portion 210 and the second clamping portion 220 along the first direction X. Specific structures of the first clamping portion 210 and the second clamping portion 220 may be adjusted according to a specific shape of the locking structure 150, which may be arc structures or planar structures and are not limited in this embodiment.

For example, as shown in FIG. 30, the clamp 200 further includes a connecting assembly 230, the first clamping portion 210 and the second clamping portion 220 are each provided with a fixed portion 240, and the connecting assembly 230 has a first end connected to the fixed portion 240 and a second end connected to the frame 320 of the photovoltaic module 300.

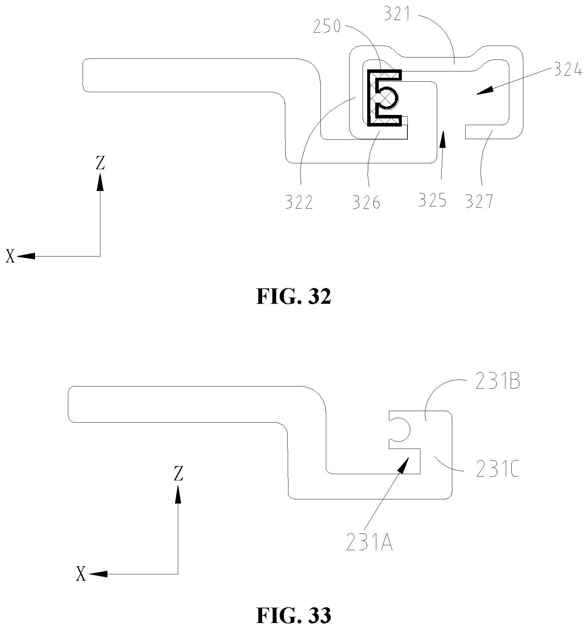

In an embodiment, as shown in FIG. 30, FIG. 31, and FIG. 32, the connecting assembly 230 includes a first connecting member 231, and the first connecting member 231 has a first end connected to the fixed portion 240 and a second end fixedly connected to the frame 320. As shown in FIG. 33, the second end of the first connecting member 231 connected to the frame 320 is provided with a connection limiting section 231B extending along the first direction X. As shown in FIG. 2, the first portion 321, the second portion 322, and the third portion 323 of the frame 320 define an accommodating space 324, and along the width direction X of the frame 320, for example, along the first direction X, an opening 325 is arranged between the second portion 322 and the third portion 323. The accommodating space 324 is communicated with the outside via the opening 325.

In this embodiment, the accommodating space 324 is used to accommodate the connection limiting section 231B, so that the first connecting member 231 and the frame 320 form a limiting connection relationship. Moreover, when the first connecting member 231 is connected to the frame 320, the light-facing surface 3101 of the laminate 310 may not be blocked, ensuring the photoelectric conversion efficiency of the photovoltaic module 300. Moreover, part of a structure of the first connecting member 231 extends into the frame 320 for connection, which can reduce a dimension of the clamp 200 in the first direction X.

For example, as shown in FIG. 32, the frame 320 further includes a first extension portion 326 and a second extension portion 327, along the third direction Z, an end of the second portion 322 away from the first portion 321 is fixedly connected to the first extension portion 326, and the first extension portion 326 extends towards interior of the accommodating space 324 along the first direction X. Additionally/alternatively, along the third direction Z, an end of the third portion 323 away from the first portion 321 is fixedly connected to the second extension portion 327, and the second extension portion 327 extends towards the interior of the accommodating space 324 along the first direction X.

In this embodiment, the first extension portion 326 and/or the second extension portion 327 extend horizontally towards the interior of the accommodating space 324, and the connection limiting section 231B, when in the accommodating space 324, can overlap the first extension portion 326 or the second extension portion 327, so that the first connecting member 231 and the frame 320 form a snap connection, which improves stability of the connection between the clamp 200 and the photovoltaic module 300.

For example, the first portion 321 of the frame 320 is recessed towards a direction away from the photovoltaic module 300. That is, at least part of the first portion 321 forms a protrusion towards the interior of the accommodating space 324. The protrusion can limit movement of the connection limiting section 231B along the third direction Z with the first extension portion 326 and/or the second extension portion 327. As shown in FIG. 33, the first connecting member 231 is further provided with a connecting section 231C, the connecting section 231C, the connection limiting section 231B, and a body of the first connecting member 231 jointly define a connecting groove 231A, and at least part of the first extension portion 326 or the second extension portion 327 can extend into the connecting groove 231A. In this case, the connection limiting section 231B and the body of the first connecting member 231 can jointly limit movement of the frame 320 along the third direction Z. The above structures cooperate to improve stability of the connection between the photovoltaic module 300 and the clamp 200, thereby improving wind resistance and trampling resistance of the photovoltaic module 300 and improving operational stability and an operating life of the photovoltaic module 300.

For example, as shown in FIG. 32, the opening 325 is formed between the first extension portion 326 and the second extension portion 327, and along the first direction X, a distance between the first extension portion 326 and the second extension portion 327 is greater than or equal to a dimension of the connection limiting section 231B to ensure that the connection limiting section 231B can enter, along the third direction Z, the accommodating space 324 via the opening 325.

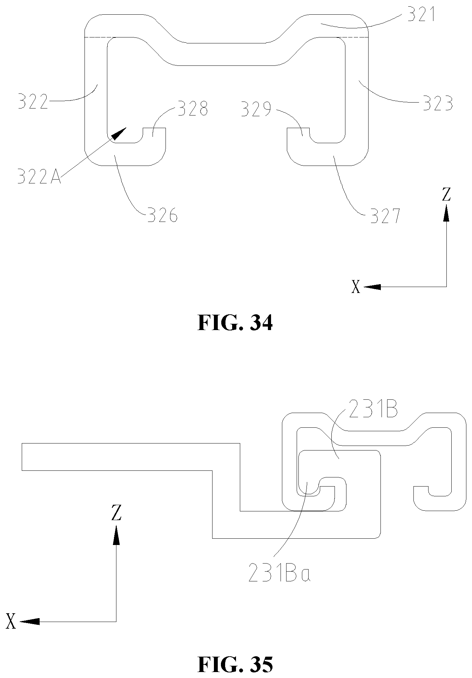

In an embodiment, as shown in FIG. 34, along the width direction of the frame 320, for example, along the first direction X, a first limiting portion 328 is provided at an end of the first extension portion 326 away from the second portion 322, and the first limiting portion 328 extends along the third direction Z towards the first portion 321; and/or, along the first direction X, a second limiting portion 329 is provided at an end of the second extension portion 327 away from the third portion 323, and the second limiting portion 329 extends along the third direction Z towards the first portion 321.

In this embodiment, a limiting groove 322A is formed between the second portion 322, the first extension portion 326, and the first limiting portion 328, and/or a limiting groove 322Ais formed between the third portion 323, the second extension portion 327, and the second limiting portion 329. Correspondingly, as shown in FIG. 35, the connection limiting section 231B is provided with a limiting protrusion 231Ba protruding towards the first extension portion 326, and the limiting groove 322A is configured to accommodate the limiting protrusion 231Ba, so that the second portion 322 can limit, together with the first limiting portion 328, movement of the first connecting member 231 along the first direction X, and/or the third portion 323 can limit, together with the second limiting portion 329, movement of the first connecting member 231 along the first direction X, further improving the stability of the connection between the photovoltaic module 300 and the clamp 200.

For example, the connection limiting section 231B may be provided with only one limiting protrusion 231Ba as shown in FIG. 35, which is in limiting fit with the second portion 322, the first extension portion 326, and the first limiting portion 328, or in limiting fit with the third portion 323, the second extension portion 327, and the second limiting portion 329.

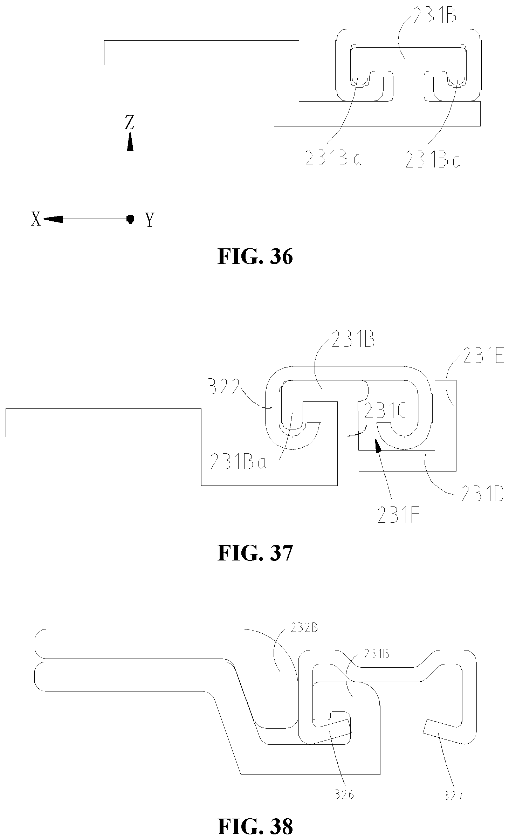

For another example, the connection limiting section 231B may be provided with two limiting protrusions 231Ba as shown in FIG. 36. One limiting protrusion 231Ba is in limiting fit with the second portion 322, the first extension portion 326, and the first limiting portion 328, and the other limiting protrusion 231Ba is in limiting fit with the third portion 323, the second extension portion 327, and the second limiting portion 329, to further improve an anti-off effect between the first connecting member 231 and the frame 320. It is to be noted that, when the structure is used, the first connecting member 231 should be assembled with the frame 320 along the second direction Y, that is, the connection limiting section 231B should be inserted into the accommodating space 324 along the second direction Y.

This embodiment further provides a variation structure of the first connecting member 231. As shown in FIG. 37, the first connecting member 231 is further provided with a horizontal extension section 231D extending along the first direction X and a vertical extension section 231E extending along the third direction Z. The horizontal extension section 231D is fixedly connected to the connecting section 231C and the vertical extension section 231E respectively, and a support groove 231F is formed between the three. When the first connecting member 231 fits the frame 320, the connection limiting section 231B extends into the accommodating space 324. While the limiting protrusion 231Ba is in limiting fit with the second portion 322, the first extension portion 326, and the first limiting portion 328, the third portion 323, the second extension portion 327, and the second limiting portion 329 are all accommodated in the support groove 231F. In this case, the first connecting member 231 and the frame 320 can achieve limiting fit in both the first direction X and the third direction Z, which improves stability of the connection between the two. Moreover, the support groove 231F can provide a certain support for the photovoltaic module 300, which prevents great shaking of the photovoltaic module 300 along the third direction Z, thereby improving stability of mounting of the photovoltaic module.

As shown in FIG. 38, when the connection limiting section 231B is provided with the limiting protrusion 231Ba, the frame 320 may not be provided with the first limiting portion 328 and the second limiting portion 329, but the first extension portion 326 and/or the second extension portion 327 are/is arranged to have a structure tilting towards the interior of the accommodating space 324. An end of the first extension portion 326 away from the second portion 322 and/or an end of the second extension portion 327 away from the third portion 323 may form an abutting structure with the limiting protrusion 231Ba, so that the first extension portion 326 and/or the second extension portion 327 engage/engages with the limiting protrusion 231Ba, which can also achieve an effect of limiting the movement of the connection limiting section 231B along the first direction X and prevent detachment of the connecting limiting section 231B from the opening 325.

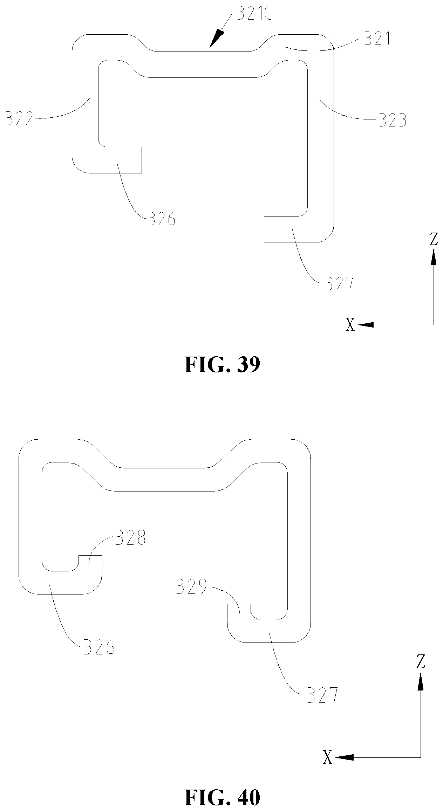

In an embodiment, as shown in FIG. 39 and FIG. 40, along the third direction Z, a height of the second portion 322 is less than that of the third portion 323.

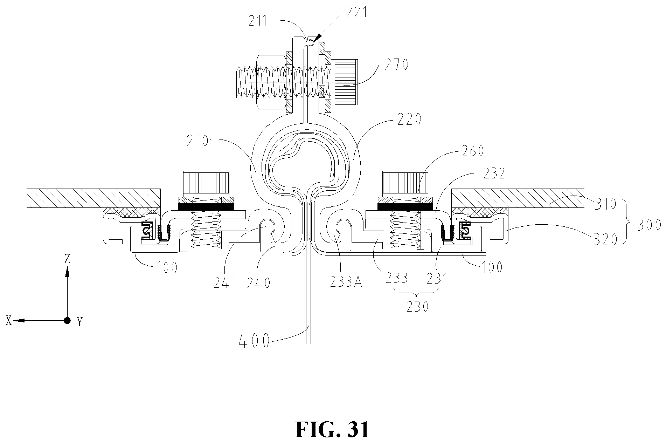

In this embodiment, for example, along the first direction X, the second portion 322 is located on one side of the frame 320 close to the clamp 200, and the third portion 323 is located on one side of the frame 320 close to the laminate 310. As shown in FIG. 30 and FIG. 31, the connection limiting section 231B of the first connecting member 231 overlaps and fits the first extension portion 326, while the third portion 323 has no substantial connection with the first connecting member 231. In this case, the height of the third portion 323 along the third direction Z may be set larger so that the second extension portion 327 can abut against the color steel tile 100 to prevent suspension in the air, thereby improving the stability of the frame 320. Similarly, if the connection limiting section 231B of the first connecting member 231 overlaps and fits the second extension portion 327, the height of the second portion 322 along the third direction Z may be set larger so that the first extension portion 326 can abut against the color steel tile 100. A value of a height difference between the second portion 322 and the third portion 323 is equal to a thickness of the body of the first connecting member 231 to ensure that a part reaching the frame 320 abuts against the color steel tile 100 without interference.

As shown in FIG. 39 and FIG. 40, the frame 320 in this embodiment may be provided with the first limiting portion 328 and the second limiting portion 329 or may not be provided with the first limiting portion 328 and the second limiting portion 329, as long as an actual structure of the frame 320 matches an actual structure of the first connecting member 231.

As shown in FIG. 32, in the above embodiments, a limiting member 250 may also be connected to the connection limiting section 231B, and along the first direction X, the limiting member 250 has a first end fixedly connected to the connection limiting section 231B and a second end abutting against and fitting the second portion 322. The limiting member 250 may be an elastic member such as silicone or rubber to increase friction between the first connecting member 231 and the frame 320, prevent detachment, and reduce a possibility of loosening of the first connecting member 231 and the frame 320.

As shown in FIG. 30, FIG. 31, and FIG. 41, in the above embodiments, the connecting assembly 230 further includes a second connecting member 232, the second connecting member 232 includes a clamping limiting section 232A, and along the first direction X, two ends of the clamping limiting section 232A abut against the first connecting member 231 and the frame 320 respectively.

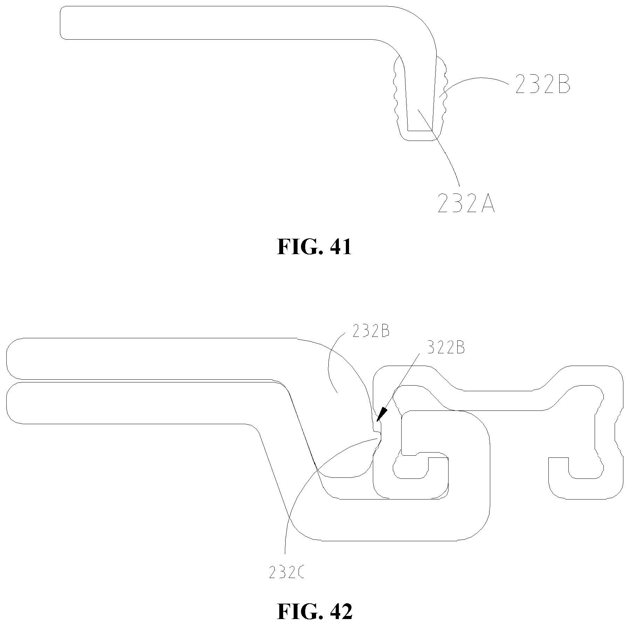

The connection limiting section 231B, after extending into the accommodating space 324 via the opening 325, is required to move along the first direction X to overlap and fit the first extension portion 326 or the second extension portion 327. Therefore, there is still a gap between the first connecting member 231 and the frame 320 that are connected. The clamping limiting section 232A of the second connecting member 232 is arranged at the gap to increase friction between the first connecting member 231 and the frame 320 along the second direction Y and prevent sliding relative to each other in the second direction Y, so as to prevent sliding of the photovoltaic module 300 relative to the clamp 200 on the roof and ensure stability of mounting of the photovoltaic module 300. However, an area of contact of the structure with the first connecting member 231 and the frame 320 is excessively small, which may lead to an unsatisfactory limiting effect of the second connecting member 232. In this case, as shown in FIG. 41, an anti-slip member 232B sleeves the clamping limiting section 232A. The anti-slip member 232B is made of an elastic material such as silicone or rubber. The anti-slip member 232B can form interference fit with the first connecting member 231 and the frame 320 on the basis of ensuring that the clamping limiting section 232A is smoothly placed in the gap, so as to further increase the friction and improve stability of the connection between the first connecting member 231 and the frame 320.

The anti-slip member 232B has limiting ribs arranged around a circumference, and the limiting ribs may be in the shape of zigzags, corrugations, or threads, which is not limited in this embodiment.

Alternatively, structures of the first connecting member 231 and the second connecting member 232 may be appropriately adjusted. As shown in FIG. 41, a part where the first connecting member 231 fits the clamping limiting section 232Ais arranged into an inclined structure. In this case, the gap between the first connecting member 231 and the frame 320 is in the shape of a trapezoid that is wide at the top and narrow at the bottom along the third direction Z, and the second connecting member 232 is configured to have a same trapezoidal structure as the gap, which is wide at the top and narrow at the bottom along the third direction Z. This facilitates the second connecting member 232 to extend into the gap between the first connecting member 231 and the frame 320, and can also ensure that the entire gap is filled up with the clamping limiting section 232A, thereby preventing relative sliding between the connecting assembly 230 and the photovoltaic module 300.

Further, as shown in FIG. 42, a protruding portion 232C may also be provided on one side of the clamping limiting section 232A close to the frame 320 along the first direction X, and a recess 322B is correspondingly arranged on the frame 320. During the extension of the clamping limiting section 232A into the gap between the first connecting member 231 and the frame 320, the protruding portion 232C can slide along the recess 322B, making the mounting process of the clamping limiting section 232A more stable. Moreover, the recess 322B can limit movement of the protruding portion 232C along the third direction Z, thereby preventing up-and-down movement of the second connecting member 232 along the third direction Z and further improving the stability of the second connecting member 232.

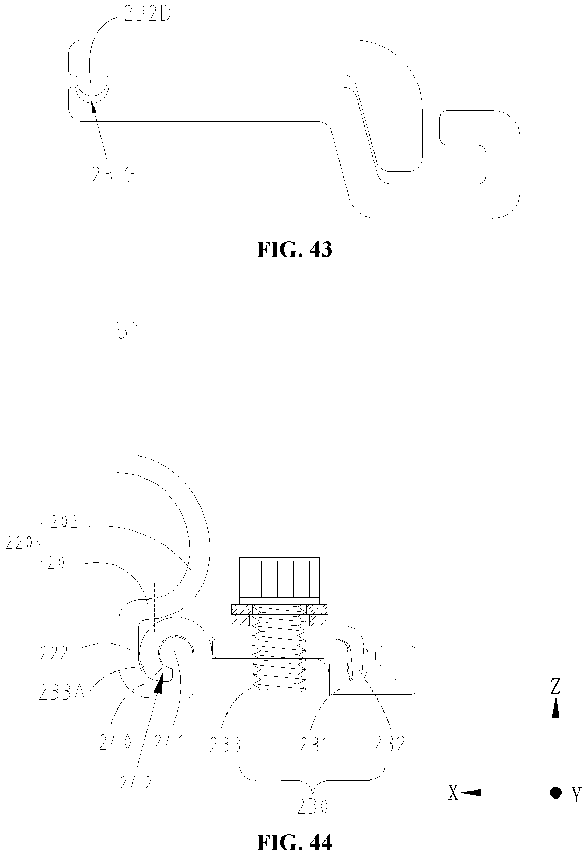

In addition, as shown in FIG. 43, the second connecting member 232 may also be provided with a second positioning protrusion 232D protruding towards the first connecting member 231 along the third direction Z, and the first connecting member 231 may be correspondingly provided with a second positioning recess 231G configured to accommodate the second positioning protrusion 232D, to realize pre-positioning of the first connecting member 231 and the second connecting member 232 in the first direction X, thereby improving assembly efficiency of the second connecting member 232.

It is to be noted that, in the above embodiments, the width direction of the frame 320, the width direction of the photovoltaic module 300, the first direction, and the width direction of the photovoltaic facility are all the direction X, the length direction of the photovoltaic module 300, the second direction, and the length direction of the photovoltaic facility are all the direction Y, and the thickness direction of the photovoltaic module 300 and the height direction of the photovoltaic facility are both the direction Z.

In addition, in the present disclosure, some embodiments are provided for the connection between the connecting assembly 230 and the fixed portion 240. In some embodiments, as shown in FIG. 30 and FIG. 31, the clamp 200 further includes a longitudinal fastener 260, and the connecting assembly 230 and the fixed portion 240 are fixedly connected through the longitudinal fastener 260.

In some embodiments, as shown in FIG. 44, the connecting assembly 230 is pivotally connected to the clamping portion. For example, along the third direction Z, the longitudinal fastener 260 sequentially passes through the second connecting member 232, the first connecting member 231, and a rotation fitting member 233. The first connecting member 231 is provided with a first mounting hole extending along the first direction X, the second connecting member 232 is provided with a second mounting hole extending along the first direction X, and the longitudinal fastener 260 is in sliding fit with the first mounting hole and/or the second mounting hole. In this embodiment, the clamping portion is fixed to the color steel tile 100, and the connecting assembly 230 has one end fixedly connected to the photovoltaic module 300 and the other end rotatable relative to the clamping portion. Therefore, when the photovoltaic module 300 is blown by wind and is entirely lifted upwards along the third direction Z or a middle position of the photovoltaic module 300 along the first direction X is pressed, causing two ends to be lifted upwards along the third direction Z, an end of the connecting assembly 230 connected to the photovoltaic module 300 can be driven to move upwards synchronously. In this case, the other end of the connecting assembly 230 can rotate relative to the fixed portion 240. Compared with a structure in which two ends of the connecting assembly 230 are fixedly connected to the photovoltaic module 300 and the clamping portion respectively, the structure in which the connecting assembly 230 is pivotally connected to the fixed portion 240 can prevent shear deformation of the connecting assembly 230 when the photovoltaic module 300 is lifted up, thereby ensuring structural stability of the clamp 200 and helping prolong a service life of the clamp 200. Since the connecting assembly 230 can move synchronously with the photovoltaic module 300, a stable connection relationship between the two can always be maintained, and loosening is not easy, which improves stability of mounting of the photovoltaic module 300. The arrangement of the first mounting hole and the second mounting hole facilitates adjustment of a relative positional relationship between the first connecting member 231, the second connecting member 232, and the fixed portion 240, thereby improving flexibility of mounting of the connecting assembly 230.

For example, as shown in FIG. 44, the clamping portion includes a fixed portion 240, the fixed portion 240 is provided with a rotating shaft 241, the connecting assembly 230 includes a rotation fitting member 233, and along the first direction X, the first connecting member 231 has one end fixedly connected to the rotation fitting member 233 and the other end fixedly connected to the frame 320. The rotation fitting member 233 is provided with a rotating portion 233A, and the rotating portion 233A sleeves the rotating shaft 241, enabling the rotation fitting member 233 to rotate around the rotating shaft 241.

The rotating shaft 241 has a columnar structure extending along the second direction Y, and the rotating portion 233A has an annular structure with a notch sleeving the rotating shaft 241. When the photovoltaic module 300 drives the connecting assembly 230 to move upwards along the third direction Z, the rotating portion 233A can rotate around the rotating shaft 241, so that the connecting assembly 230 as a whole rotates relative to the fixed portion 240. Along the first direction X, a dimension of a size of the rotating portion 233A is less than that of the rotating shaft 241, which can prevent separation of the rotation fitting member 233 from the rotating shaft 241. The rotation fitting member 233 is in insertion fit with the rotating shaft 241 along the second direction Y.

In an embodiment, as shown in FIG. 44, the fixed portion 240 is provided with a first limiting groove 242, and when the rotation fitting member 233 rotates around the rotating shaft 241, at least part of the rotating portion 233A slides along the first limiting groove 242.

In this embodiment, the first limiting groove 242 can limit rotation of the rotation fitting member 233 only around the rotating shaft 241 without sliding relative to the fixed portion 240 along the first direction X and/or the third direction Z, thereby ensuring stability of rotation of the connecting assembly 230 and also improving stability of the connection between the connecting assembly 230 and the fixed portion 240.

For example, the first limiting groove 242 is L-shaped and can limit a moving distance of the rotating portion 233A in the first limiting groove 242, thereby limiting an angle of rotation of the rotation fitting member 233 around the rotating shaft 241. For example, a maximum angle range of rotation of the rotation fitting member 233 around the rotating shaft 241 ranges from 5° to 10°, which may be, for example, 5°, 5.5°, 6°, 6.5°, 7°, 7.5°, 8°, 8.5°, 9°, 9.5°, or 10°, or may be other values in the above range, and is not limited in this embodiment.

If a maximum angle of rotation of the rotation fitting member 233 around the rotating shaft 241 is less than 5°, an angle range of rotation of the connecting assembly 230 relative to the clamping portion is excessively small, which cannot achieve an effect of preventing deformation of the clamp under a shear force. If the maximum angle of rotation of the rotation fitting member 233 around the rotating shaft 241 is greater than 10°, the angle range of rotation of the connecting assembly 230 relative to the clamping portion is excessively large, leading to a risk of loosening and separation of the connecting assembly 230 and the fixed portion 240. Therefore, when the maximum angle range of rotation of the rotation fitting member 233 around the rotating shaft 241 ranges from 5° to 10°, it can be ensured that the clamp may not deform due to shearing when the photovoltaic module 300 is lifted up, can also prevent rotation of the connecting assembly 230 at an excessively large angle, thereby improving wind resistance of the photovoltaic module 300, and can prevent separation of the connecting assembly 230 from the clamping portion, thereby improving stability of the connection between the photovoltaic module 300 and the clamp.

A specific structure of the connection between the clamping portion of the clamp 200 and the color steel tile 100 is continuously introduced below.

As shown in FIG. 30, FIG. 31, and FIG. 45, the clamping portion includes a first clamping portion 210 and a second clamping portion 220 arranged opposite to each other along the first direction X, an accommodating cavity 203 is formed between the first clamping portion 210 and the second clamping portion 220, and the locking structure 150 is accommodated in the accommodating cavity 203, so that the first clamping portion 210 and the second clamping portion 220 can jointly clamp the locking structure 150 along the first direction X, thereby realizing a fixed connection between the clamp 200 and the color steel tile 100.

In an embodiment, as shown in FIG. 30, FIG. 31, and FIG. 45, the first clamping portion 210 is provided with a first positioning protrusion 211 extending towards the second clamping portion 220 along the first direction X, the second clamping portion 220 is provided with a first positioning groove 221, and the first positioning protrusion 211 is accommodated in the first positioning groove 221.

In this embodiment, the first clamping portion 210 and the second clamping portion 220 have a split structure, and the two are pre-positioned through engagement of the first positioning protrusion 211 with the first positioning groove 221, to ensure a relative positional relationship between the first clamping portion 210 and the second clamping portion 220 and improve assembly efficiency of the two. In addition, the fixed connection between the first clamping portion 210 and the second clamping portion 220 may be realized by using a transverse fastener 270, to improve stability of the connection between the first clamping portion 210 and the second clamping portion 220.

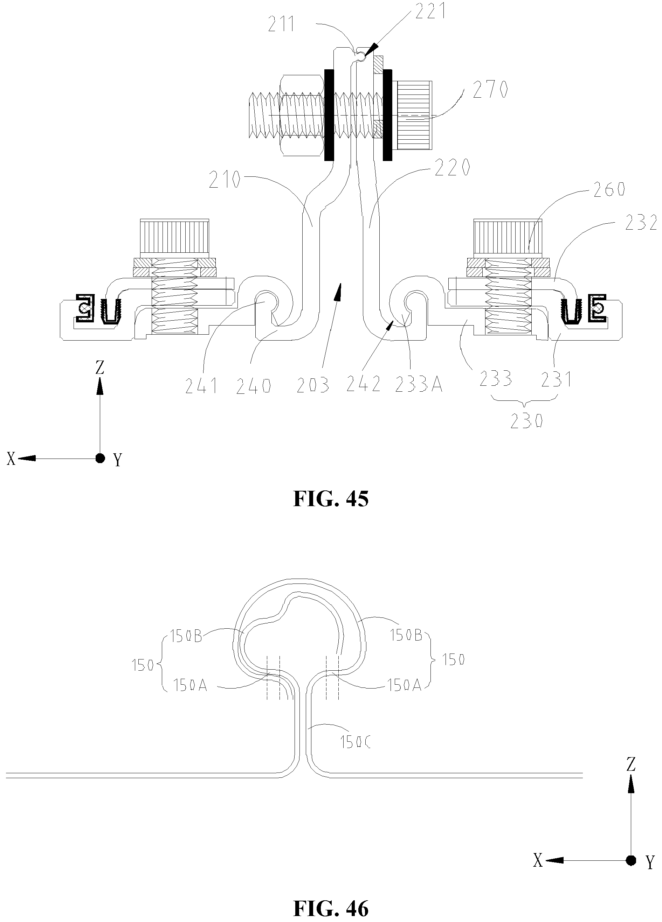

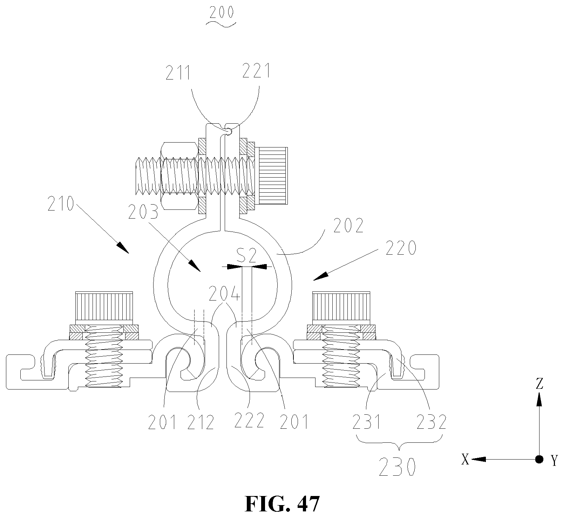

Specific structures of the first clamping portion 210 and the second clamping portion 220 may be adjusted according to a specific shape of the locking structure 150. The first clamping portion 210 and the second clamping portion 220 may have a straight arm structure as shown in FIG. 45, used to fit a 360° upright overlock. The first clamping portion 210 and the second clamping portion 220 may alternatively have an arc-shaped structure as shown in FIG. 44, used to fit an arc-shaped locking structure 150 shown in FIG. 47.

When the locking structure 150 has an arc-shaped structure, as shown in FIG. 46, the locking structure 150 is provided with a first planar section 150A extending along the first direction X, and as shown in FIG. 47, at least one of the first clamping portion 210 and the second clamping portion 220 is provided with a second planar section 201 extending along the first direction X. Along the third direction Z, the first planar section 150A fits the second planar section 201.

In this embodiment, when the clamping portion clamps the color steel tile 100, the second planar section 201 of the clamping portion fits the first planar section 150A of the locking structure 150 along the third direction Z. On the one hand, the second planar section 201 can support the first planar section 150A, and at the same time, can limit downward movement of the locking structure 150 along the third direction Z, thereby ensuring stable clamping of the locking structure 150 by the clamping portion. On the other hand, the fitting between the second planar section 201 and the first planar section 150A can increase an area of contact between the clamp 200 and the color steel tile 100. When the clamp 200 is subjected to an upward force along the third direction Z, the first planar section 150A can maintain a fit state with the second planar section 201 to limit upward movement of the clamping portion along the third direction Z, thereby preventing detachment of the clamp 200 from the color steel tile 100 and improving stability of the connection between the clamp 200 and the color steel tile 100.

For example, as shown in FIG. 47, along the first direction X, a length S2 of the second planar section 201 satisfies: 0 mm<L2≤6 mm. The length may be, for example, 0.1 mm, 0.5 mm, 1 mm, 1.2 mm, 1.8 mm, 2 mm, 2.5 mm, 3 mm, 3.4 mm, 4 mm, 4.5 mm, 5 mm, 5.6 mm, or 6 mm, or may be other values in the above range, which is not limited in this embodiment.

If S2 is excessively large (e.g., greater than 6 mm), a dimension of the clamping portion along the first direction X may be excessively large, thereby leading to an excessively large volume of the clamp 200, occupation of too much space, and an impossible improvement in stability of the clamping between the clamp 200 and the color steel tile 100.

In an embodiment, as shown in FIG. 46, the locking structure 150 is further provided with a first curved section 150B fixedly connected to the first planar section 150A, and as shown in FIG. 47, at least one of the first clamping portion 210 and the second clamping portion 220 is provided with a second curved section 202 fixedly connected to the second planar section 201. At least part of the second curved section 202 fits the first curved section 150B.

In this embodiment, both the first curved section 150B and the second planar section 201 have arc-shaped structures arched along the first direction X. When at least part of the second curved section 202 fits the first curved section 150B, the clamp 200 can limit movement of the locking structure 150 in the first direction X. In this case, the first clamping portion 210 and the second clamping portion 220 can wrap the locking structure 150 in a circumferential direction, further reducing a possibility of shaking of the locking structure 150.

Therefore, when the locking structure 150 is provided with the first planar section 150A and the first curved section 150B and the clamping portion is provided with the second planar section 201 and the second curved section 202, an area of contact between the clamp 200 and the color steel tile 100 can be increased, and frictional resistance between the two can be increased, thereby improving stability of the connection between the two. The clamp 200 can also limit movement of the color steel tile 100 along the first direction X and the third direction Z, thereby preventing detachment of the clamp 200 from the color steel tile 100.

In an embodiment, as shown in FIG. 46, the locking structure 150 is further provided with a vertical section 150C connected to the first planar section 150A and a straight arm section extending along the third direction Z. As shown in FIG. 47, the first clamping portion 210 is provided with a first straight arm section 212 extending along the third direction Z, the second clamping portion 220 is provided with a second straight arm section 222 extending along the third direction Z, and the first straight arm section 212 and the second straight arm section 222 clamp the vertical section 150C along the first direction X.

In this embodiment, the first straight arm section 212 and the second straight arm section 222 jointly clamp the vertical section 150C along the first direction X, which can further increase an area of contact between the clamping portion and the locking structure 150 and limit movement of the locking structure 150 along the first direction X, thereby further improving a capability of the clamp 200 to clamp the color steel tile 100.

In addition, as shown in FIG. 46, a junction between the first planar section 150A and the vertical section 150C has a fillet structure. Correspondingly, as shown in FIG. 47, the first straight arm section 212 and/or the second straight arm section 222 and the second planar section 201 should be connected through an arc section 204, and one side of the arc section 204 facing the accommodating cavity 203 is a smooth arc surface. Thus, damages to the structure of the color steel tile 100 due to friction between the clamping portion and the locking structure 150 are prevented.

For example, a radius R of the arc section 204 satisfies: 0.5 mm≤R≤2 mm, which may be, for example, 0.5 mm, 0.6 mm, 0.7 mm, 08 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, or 2 mm, may be other values in the above range, and is not limited in this embodiment.

If R is excessively small (e.g., less than 0.5 mm), a radian of the arc section 204 is excessively small, a structure thereof is not smooth enough, and there is also a possibility of scratching the locking structure 150 during contact with the locking structure 150. If R is excessively large (e.g., greater than 2 mm), the arc section 204 has an excessively large radian and does not well fit a fillet of the locking structure 150, thereby affecting abutment fit between the first planar section 150A and the second planar section 201. Therefore, when the radius of the arc section 204 ranges from 0.5 mm to 2 mm, damages to the color steel tile 100 can be prevented, and fit with the fillet of the locking structure 150 can be realized, so that, when the clamp 200 is subjected to an upward force along the third direction Z, the clamp 200 can be locked with the color steel tile 100, further improving the stability of the connection between the clamp 200 and the color steel tile 100.

In the above embodiments, the first connecting member 231 may be assembled with the frame 320 in the factory and transported as a set, and then the first connecting member 231 is connected to the rotation fitting member 233 and the second connecting member 232 at an installation site. Alternatively, the first connecting member 231 may be first fixed to the frame 320 in an actual installation site and then connected to the rotation fitting member 233 and the second connecting member 232. Based on this, specific mounting steps of the photovoltaic facility are as follows.

In the first step, the rotating portion 233A of the rotation fitting member 233 is first slidably inserted into the rotating shaft 241 of the fixed portion 240 along the second direction Y. It is to be noted that, along the second direction Y, a dimension of the rotating shaft 241 should be 10 mm longer than that of the rotating portion 233A. In this way, a space about 5 mm can be left at two ends of the rotating shaft 241 along the second direction Y to mount pin latches, so as to play a limiting role at two ends of the rotation fitting member 233 along the second direction Y and prevent detachment of the rotation fitting member 233 from the clamping portion due to movement relative to the fixed portion 240 along the second direction Y

In the second step, the first clamping portion 210 and the second clamping portion 220 are fixed, through the transverse fastener 270 along the first direction X, to the locking structure 150 formed by two adjacent color steel tiles 100, so that the locking structure 150 is accommodated in the accommodating cavity 203.

In the third step, the photovoltaic module 300 and the first connecting member 231 that are pre-connected are connected to the second connecting member 232 and the rotation fitting member 233. For example, positions of an assembly, which is formed by the photovoltaic module 300 and the first connecting member 231, and the rotation fitting member 233 may be first adjusted along the first direction X, then the second connecting member 232 is inserted between the first connecting member 231 and the frame 320, and finally, the second connecting member 232, the first connecting member 231, and the rotation fitting member 233 are fixed and locked through the vertical fastener 260.

When the photovoltaic facility is assembled according to the above steps, connection stability and assembly efficiency of the photovoltaic facility can be improved.

## Claims

1. A photovoltaic module, comprising:
a laminate (310);
a frame (320), wherein the frame (320) comprises a first portion (321), a second portion (322), and a third portion (323), and the second portion (322) and the third portion (323) are respectively connected to two ends of the first portion (321); and
a connecting adhesive (330),
wherein a first direction (X) is parallel to a width direction of the photovoltaic module, a second direction (Y) is parallel to a length direction of the photovoltaic module, and a third direction (Z) is parallel to a thickness direction of the photovoltaic module and perpendicular to the first direction (X),
**characterized in that**
both the second portion (322) and the third portion (323) extend along the third direction (Z), and the first portion (321) is fixedly connected to the back surface of the laminate (310) through the connecting adhesive (330), and
wherein along the third direction (Z), at least part of the first portion (321) is recessed in a direction away from a photovoltaic module (300) to form an accommodating groove (321C), and the accommodating groove (321C) is configured to accommodate at least part of the connecting adhesive (330).

2. The photovoltaic module according to claim 1, wherein the first portion (321), the second portion (322), and the third portion (323) define an accommodating space (324),
an opening (325) is provided between the second portion (322) and the third portion (323), and the accommodating space (324) is communicated with outside through the opening (325), the frame (320) further comprises a first extension portion (326) and a second extension portion (327), and
wherein at least one of:
along the third direction (Z), an end of the second portion (322) away from the first portion (321) is fixedly connected to the first extension portion (326), and the first extension portion (326) extends towards interior of the accommodating space (324); or
along the third direction (Z), an end of the third portion (323) away from the first portion (321) is fixedly connected to the second extension portion (327), and the second extension portion (327) extends towards the interior of the accommodating space (324).

3. The photovoltaic module according to claim 2, wherein at least one of:
an end of the first extension portion (326) away from the second portion (322) is provided with a first limiting portion (328), and the first limiting portion (328) extends along the third direction (Z) towards the first portion (321); or
an end of the second extension portion (327) away from the third portion (323) is provided with a second limiting portion (329), and the second limiting portion (329) extends along the third direction (Z) towards the first portion (321).

4. The photovoltaic module according to claim 1, further comprising a connecting adhesive (330), wherein the second portion (322) and the third portion (323) are distributed along the third direction (Z), the connecting adhesive (330) comprises at least a first adhesive (3301) and a second adhesive (3302) distributed along the first direction (X), the first adhesive (3301) is configured to pre-fix the second portion (322) and the back surface of the laminate (310), and the second adhesive (3302) is configured to bond and fix the second portion (322) and the back surface of the laminate (310).

5. The photovoltaic module according to claim 1, wherein the frame (320) comprises two first frames (3201) arranged opposite to each other along the first direction (X), and length directions of the first frames (3201) are parallel to a second direction (Y), the second direction (Y) being parallel to a length direction of the photovoltaic module (300), the laminate (310) comprises first edges (213) arranged opposite to each other along the first direction (X) and second edges (214) arranged opposite to each other along the second direction (Y), and in the first direction (X), a minimum distance between the first frame (3201) and the first edge (213) ranges from 0 to 150 mm,
and/or,
the frame (320) further comprises two second frames (3202) arranged opposite to each other along the second direction (Y), and length directions of the second frames (3202) are parallel to the first direction (X), and
in the second direction (Y), a minimum distance between the second frame (3202) and the second edge (214) ranges from 0 to 150 mm.

6. The photovoltaic module according to claim 5, wherein the frame (320) further comprises one reinforcing frame (3203), the one reinforcing frame (3203) comprises at least one third frame (3204) located between the two first frames (3201) along the first direction (X), an angle between a length direction of the third frame (3204) and the second direction (Y) is within a range [0°, 90°), and in the first direction (X), a minimum distance between the third frame (3204) and the first frame (3201) ranges from 300 mm to 450 mm, or wherein the frame (320) further comprises a plurality of third frames (3204) distributed along the first direction (X) and/or the second direction (Y), each reinforcing frame (3203) comprises at least one third frame (3204) located between the two first frames (3201) along the first direction (X), an angle between a length direction of the third frame (3204) and the second direction (Y) is within a range of [0°, 90°), in the first direction (X), a minimum distance between the third frame (3204) and the first frame (3201) ranges from 300 mm to 450 mm, and along the first direction (X), a distance between adjacent third frames (3204) ranges from 200 mm to 550 mm,
and/or
wherein the frame (320) further comprises one reinforcing frame (3203), the one reinforcing frame (3203) comprises at least one fourth frame (3205) located between the two second frames (3202) along the first direction (X), an angle between a length direction of the fourth frame (3205) and the first direction (X) is within a range of [0°, 90°), and, in the second direction (Y), a minimum distance between the fourth frame (3205) and the second frame (3202) ranges from 500 mm to 1150 mm, or the frame (320) further comprises a plurality of fourth frames (3205) distributed along the first direction (X) and/or the second direction (Y), each reinforcing frame (3203) comprises at least one fourth frame (3205) located between the two second frames (3202) along the first direction (X), an angle between a length direction of the fourth frame (3205) and the first direction (X) is within a range of [0°, 90°), in the second direction (Y), a minimum distance between the fourth frame (3205) and the second frame (3202) ranges from 500 mm to 1150 mm, and a distance between adjacent fourth frames (3205) ranges from 300 mm to 750 mm.

7. The photovoltaic module according to claim 1, wherein the frame (320) comprises two first frames (3201) and two second frames (3202), and the first frames (3201) and the second frames (3202) each comprise a first portion (321), a second portion (322), and a third portion (323),
the first frames (3201) extend along a second direction (Y), the second direction (Y) being parallel to a length direction of the photovoltaic module, the second frames (3202) extend along the first direction (X), and the two first frames (3201) are fixedly connected to the two second frames (3202) so that the frame (320) forms a rectangular structure,
the frame (320) further comprises a reinforcing frame (3203), the reinforcing frame (3203) comprising a first portion (321), a second portion (322), and a third portion (323), and
along the first direction (X), two ends of the reinforcing frame (3203) are fixedly connected to the first frames (3201) respectively, and along the second direction (Y), the reinforcing frame (3203) is arranged between the two second frames (3202).

## Patentansprüche

1. Photovoltaikmodul, umfassend:
ein Laminat (310);
einen Rahmen (320), wobei der Rahmen (320) einen ersten Abschnitt (321), einen zweiten Abschnitt (322) und einen dritten Abschnitt (323) umfasst und der zweite Abschnitt (322) und der dritte Abschnitt (323) jeweils mit zwei Enden des ersten Abschnitts (321) verbunden sind; und
einen Verbindungsklebstoff (330),
wobei eine erste Richtung (X) parallel zu einer Breitenrichtung des Photovoltaikmoduls ist, eine zweite Richtung (Y) parallel zu einer Längenrichtung des Photovoltaikmoduls ist und eine dritte Richtung (Z) parallel zu einer Dickenrichtung des Photovoltaikmoduls und senkrecht zu der ersten Richtung (X) ist,
**dadurch gekennzeichnet, dass** sich sowohl der zweite Abschnitt (322) als auch der dritte Abschnitt (323) entlang der dritten Richtung (Z) erstrecken und der erste Abschnitt (321) durch den Verbindungsklebstoff (330) fest mit der Rückseite des Laminats (310) verbunden ist, und
wobei zumindest ein Teil des ersten Abschnitts (321) entlang der dritten Richtung (Z) in einer von einem Photovoltaikmodul (300) wegweisenden Richtung so vertieft ist, dass eine Aufnahmerille (321C) ausgebildet ist, und die Aufnahmerille (321C) so ausgeführt ist, dass sie zumindest einen Teil des Verbindungsklebstoffs (330) aufnimmt.

2. Photovoltaikmodul nach Anspruch 1, wobei der erste Abschnitt (321), der zweite Abschnitt (322) und der dritte Abschnitt (323) einen Aufnahmeraum (324) begrenzen,
zwischen dem zweiten Abschnitt (322) und dem dritten Abschnitt (323) eine Öffnung (325) vorgesehen ist und der Aufnahmeraum (324) durch die Öffnung (325) mit der Außenumgebung in Verbindung steht,
der Rahmen (320) ferner einen ersten Fortsatzabschnitt (326) und einen zweiten Fortsatzabschnitt (327) umfasst und
wobei mindestens eines aus Folgendem gilt:
ein entlang der dritten Richtung (Z) vom ersten Abschnitt (321) entferntes Ende des zweiten Abschnitts (322) ist fest mit dem ersten Fortsatzabschnitt (326) verbunden und der erste Fortsatzabschnitt (326) erstreckt sich in Richtung eines Inneren des Aufnahmeraums (324); oder
ein entlang der dritten Richtung (Z) vom ersten Abschnitt (321) entferntes Ende des dritten Abschnitts (323) ist fest mit dem zweiten Fortsatzabschnitt (327) verbunden und der zweite Fortsatzabschnitt (327) erstreckt sich in Richtung des Inneren des Aufnahmeraums (324).

3. Photovoltaikmodul nach Anspruch 2, wobei mindestens eines aus Folgendem gilt:
ein vom zweiten Abschnitt (322) entferntes Ende des ersten Fortsatzabschnitts (326) ist mit einem ersten Begrenzungsabschnitt (328) versehen und der erste Begrenzungsabschnitt (328) erstreckt sich entlang der dritten Richtung (Z) zum ersten Abschnitt (321); oder
ein vom dritten Abschnitt (323) entferntes Ende des zweiten Fortsatzabschnitts (327) ist mit einem zweiten Begrenzungsabschnitt (329) versehen und der zweite Begrenzungsabschnitt (329) erstreckt sich entlang der dritten Richtung (Z) zum ersten Abschnitt (321).

4. Photovoltaikmodul nach Anspruch 1, ferner einen Verbindungsklebstoff (330) umfassend, wobei der zweite Abschnitt (322) und der dritte Abschnitt (323) entlang der dritten Richtung (Z) verteilt sind, der Verbindungsklebstoff (330) mindestens einen ersten Klebstoff (3301) und einen zweiten Klebstoff (3302), die entlang der ersten Richtung (X) verteilt sind, umfasst, der erste Klebstoff (3301) dazu ausgelegt ist, den zweiten Abschnitt (322) und die Rückseite des Laminats (310) vorzufixieren, und der zweite Klebstoff (3302) dazu ausgelegt ist, den zweiten Abschnitt (322) und die Rückseite des Laminats (310) zu verkleben und zu fixieren.

5. Photovoltaikmodul nach Anspruch 1, wobei der Rahmen (320) zwei entlang der ersten Richtung (X) einander gegenüberliegend angeordnete erste Rahmen (3201) umfasst und die Längenrichtungen der ersten Rahmen (3201) parallel zu einer zweiten Richtung (Y) sind, die zweite Richtung (Y) parallel zu einer Längenrichtung des Photovoltaikmoduls (300) ist, das Laminat (310) entlang der ersten Richtung (X) einander gegenüberliegend angeordnete erste Kanten (213) und entlang der zweiten Richtung (Y) einander gegenüberliegend angeordnete zweite Kanten (214) umfasst und ein Mindestabstand zwischen dem ersten Rahmen (3201) und der ersten Kante (213) in der ersten Richtung (X) im Bereich von 0 bis 150 mm liegt,
und/oder,
der Rahmen (320) ferner zwei entlang der zweiten Richtung (Y) einander gegenüberliegend angeordnete zweite Rahmen (3202) umfasst und die Längenrichtungen der zweiten Rahmen (3202) parallel zur ersten Richtung (X) sind und
der Mindestabstand zwischen dem zweiten Rahmen (3202) und der zweiten Kante (214) in der zweiten Richtung (Y) zwischen 0 und 150 mm liegt.

6. Photovoltaikmodul nach Anspruch 5, wobei der Rahmen (320) ferner einen Verstärkungsrahmen (3203) umfasst, der eine Verstärkungsrahmen (3203) mindestens einen entlang der ersten Richtung (X) zwischen den beiden ersten Rahmen (3201) befindlichen dritten Rahmen (3204) umfasst, ein Winkel zwischen einer Längenrichtung des dritten Rahmens (3204) und der zweiten Richtung (Y) in einem Bereich von [0°, 90°) liegt und ein Mindestabstand zwischen dem dritten Rahmen (3204) und dem ersten Rahmen (3201) in der ersten Richtung (X) zwischen 300 mm und 450 mm liegt oder wobei der Rahmen (320) ferner eine Vielzahl von entlang der ersten Richtung (X) und/oder der zweiten Richtung (Y) verteilten dritten Rahmen (3204) umfasst, jeder Verstärkungsrahmen (3203) mindestens einen entlang der ersten Richtung (X) zwischen den beiden ersten Rahmen (3201) befindlichen dritten Rahmen (3204) umfasst, ein Winkel zwischen einer Längenrichtung des dritten Rahmens (3204) und der zweiten Richtung (Y) in einem Bereich von [0°, 90°) liegt, ein Mindestabstand zwischen dem dritten Rahmen (3204) und dem ersten Rahmen (3201) in der ersten Richtung (X) im Bereich von 300 mm bis 450 mm liegt und ein Abstand zwischen benachbarten dritten Rahmen (3204) entlang der ersten Richtung (X) im Bereich von 200 mm bis 550 mm liegt,
und/oder
wobei der Rahmen (320) ferner einen Verstärkungsrahmen (3203) umfasst, der eine Verstärkungsrahmen (3203) mindestens einen entlang der ersten Richtung (X) zwischen den beiden zweiten Rahmen (3202) befindlichen vierten Rahmen (3205) umfasst, ein Winkel zwischen einer Längenrichtung des vierten Rahmens (3205) und der ersten Richtung (X) in einem Bereich von [0°, 90°) liegt und ein Mindestabstand zwischen dem vierten Rahmen (3205) und dem zweiten Rahmen (3202) in der zweiten Richtung (Y) zwischen 500 mm und 1150 mm liegt oder der Rahmen (320) ferner eine Vielzahl von entlang der ersten Richtung (X) und/oder der zweiten Richtung (Y) verteilten vierten Rahmen (3205) umfasst, jeder Verstärkungsrahmen (3203) mindestens einen entlang der ersten Richtung (X) zwischen den beiden zweiten Rahmen (3202) befindlichen vierten Rahmen (3205) umfasst, ein Winkel zwischen einer Längenrichtung des vierten Rahmens (3205) und der ersten Richtung (X) in einem Bereich von [0°, 90°) liegt, ein Mindestabstand zwischen dem vierten Rahmen (3205) und dem zweiten Rahmen (3202) in der zweiten Richtung (X) im Bereich von 500 mm bis 1150 mm liegt und ein Abstand zwischen benachbarten vierten Rahmen (3205) im Bereich von 300 mm bis 750 mm liegt.

7. Photovoltaikmodul nach Anspruch 1, wobei der Rahmen (320) zwei erste Rahmen (3201) und zwei zweite Rahmen (3202) umfasst und die ersten Rahmen (3201) und die zweiten Rahmen (3202) jeweils einen ersten Abschnitt (321), einen zweiten Abschnitt (322) und einen dritten Abschnitt (323) umfassen,
die ersten Rahmen (3201) sich entlang einer zweiten Richtung (Y) erstrecken, die zweite Richtung (Y) parallel zu einer Längenrichtung des Photovoltaikmoduls ist; die zweiten Rahmen (3202) sich entlang der ersten Richtung (X) erstrecken und die beiden ersten Rahmen (3201) fest mit den beiden zweiten Rahmen (3202) so verbunden sind, dass der Rahmen (320) eine rechteckige Konstruktion bildet,
der Rahmen (320) ferner einen Verstärkungsrahmen (3203) umfasst, wobei der Verstärkungsrahmen (3203) einen ersten Abschnitt (321), einen zweiten Abschnitt (322) und einen dritten Abschnitt (323) umfasst, und
die beiden Enden des Verstärkungsrahmens (3203) entlang der ersten Richtung (X) jeweils fest mit den ersten Rahmen (3201) verbunden sind und der Verstärkungsrahmen (3203) entlang der zweiten Richtung (Y) zwischen den beiden zweiten Rahmen (3202) angeordnet ist.

## Revendications

1. Module photovoltaïque, comprenant :
un stratifié (310) ;
un cadre (320), dans lequel le cadre (320) comprend une première partie (321), une deuxième partie (322) et une troisième partie (323), et la deuxième partie (322) et la troisième partie (323) sont respectivement reliées à deux extrémités de la première partie (321) ; et
un adhésif de liaison (330),
dans lequel une première direction (X) est parallèle à une direction de largeur du module photovoltaïque, une deuxième direction (Y) est parallèle à une direction de longueur du module photovoltaïque, et une troisième direction (Z) est parallèle à une direction d'épaisseur du module photovoltaïque et perpendiculaire à la première direction (X),
**caractérisé en ce que** la deuxième partie (322) et la troisième partie (323) s'étendent dans la troisième direction (Z), et la première partie (321) est reliée de manière fixe à la surface arrière du stratifié (310) par l'intermédiaire de l'adhésif de liaison (330), et
dans lequel dans la troisième direction (Z), au moins une partie de la première partie (321) est renfoncée dans une direction opposée à un module photovoltaïque (300) pour former une rainure de réception (321C), et la rainure de réception (321C) est configurée pour recevoir au moins une partie de l'adhésif de liaison (330).

2. Module photovoltaïque selon la revendication 1, dans lequel la première partie (321), la deuxième partie (322) et la troisième partie (323) définissent un espace de réception (324),
une ouverture (325) est ménagée entre la deuxième partie (322) et la troisième partie (323), et l'espace de réception (324) communique avec l'extérieur par l'intermédiaire de l'ouverture (325),
le cadre (320) comprend en outre une première partie d'extension (326) et une seconde partie d'extension (327), et
présentant au moins l'une des caractéristiques suivantes :
dans la troisième direction (Z), une extrémité de la deuxième partie (322) à l'opposé de la première partie (321) est reliée de manière fixe à la première partie d'extension (326), et la première partie d'extension (326) s'étend vers l'intérieur de l'espace de réception (324) ; ou
dans la troisième direction (Z), une extrémité de la troisième partie (323) à l'opposé de la première partie (321) est reliée de manière fixe à la deuxième partie d'extension (327), et la deuxième partie d'extension (327) s'étend vers l'intérieur de l'espace de réception (324).

3. Module photovoltaïque selon la revendication 2, présentant au moins l'une des caractéristiques suivantes :
une extrémité de la première partie d'extension (326) à l'opposé de la deuxième partie (322) est pourvue d'une première partie de limitation (328), et la première partie de limitation (328) s'étend dans la troisième direction (Z) vers la première partie (321) ; ou
une extrémité de la deuxième partie d'extension (327) à l'opposé de la troisième partie (323) est pourvue d'une deuxième partie de limitation (329), et la deuxième partie de limitation (329) s'étend dans la troisième direction (Z) vers la première partie (321).

4. Module photovoltaïque selon la revendication 1, comprenant en outre un adhésif de liaison (330), dans lequel la deuxième partie (322) et la troisième partie (323) sont distribuées dans la troisième direction (Z), l'adhésif de liaison (330) comprend au moins un premier adhésif (3301) et un deuxième adhésif (3302) distribués dans la première direction (X), le premier adhésif (3301) est configuré pour fixer préalablement la deuxième partie (322) et la surface arrière du stratifié (310), et le deuxième adhésif (3302) est configuré pour lier et fixer la deuxième partie (322) et la surface arrière du stratifié (310).

5. Module photovoltaïque selon la revendication 1, dans lequel le cadre (320) comprend deux premiers cadres (3201) disposés à l'opposé l'un de l'autre dans la première direction (X), et les directions de longueur des premiers cadres (3201) sont parallèles à une deuxième direction (Y), la deuxième direction (Y) étant parallèle à une direction de longueur du module photovoltaïque (300), le stratifié (310) comprend des premiers bords (213) disposés à l'opposé l'un de l'autre dans la première direction (X) et des seconds bords (214) disposés à l'opposé l'un de l'autre dans la deuxième direction (Y), et dans la première direction (X), une distance minimale entre le premier cadre (3201) et le premier bord (213) est comprise entre 0 et 150 mm,
et/ou,
le cadre (320) comprend en outre deux seconds cadres (3202) disposés à l'opposé l'un de l'autre dans la deuxième direction (Y), et les directions de longueur des seconds cadres (3202) sont parallèles à la première direction (X), et
dans la deuxième direction (Y), une distance minimale entre le deuxième cadre (3202) et le deuxième bord (214) est comprise entre 0 et 150 mm.

6. Module photovoltaïque selon la revendication 5, dans lequel le cadre (320) comprend en outre un cadre de renfort (3203), le cadre de renfort (3203) comprend au moins un troisième cadre (3204) situé entre les deux premiers cadres (3201) dans la première direction (X), un angle entre une direction de longueur du troisième cadre (3204) et la deuxième direction (Y) est compris dans une plage [0°, 90°), et dans la première direction (X), une distance minimale entre le troisième cadre (3204) et le premier cadre (3201) est comprise entre 300 mm à 450 mm, ou dans lequel le cadre (320) comprend en outre une pluralité de troisièmes cadres (3204) répartis dans la première direction (X) et/ou dans la deuxième direction (Y), chaque cadre de renfort (3203) comprend au moins un troisième cadre (3204) situé entre les deux premiers cadres (3201) dans la première direction (X), un angle entre une direction de longueur du troisième cadre (3204) et la deuxième direction (Y) est compris dans une plage de [0°, 90°), dans la première direction (X), une distance minimale entre le troisième cadre (3204) et le premier cadre (3201) est comprise entre 300 mm et 450 mm, et dans la première direction (X), une distance entre des troisièmes cadres adjacents (3204) est comprise entre 200 mm et 550 mm,
et/ou
dans lequel le cadre (320) comprend en outre un cadre de renfort (3203), ledit un cadre de renfort (3203) comprend au moins un quatrième cadre (3205) situé entre les deux deuxièmes cadres (3202) dans la première direction (X), un angle entre une direction de longueur du quatrième cadre (3205) et la première direction (X) est compris dans une plage de [0°, 90°), et, dans la deuxième direction (Y), une distance minimale entre le quatrième cadre (3205) et le deuxième cadre (3202) est comprise entre 500 mm et 1150 mm, ou le cadre (320) comprend en outre une pluralité de quatrièmes cadres (3205) répartis dans la première direction (X) et/ou dans la deuxième direction (Y), chaque cadre de renfort (3203) comprend au moins un quatrième cadre (3205) situé entre les deux deuxièmes cadres (3202) dans la première direction (X), un angle entre une direction de longueur du quatrième cadre (3205) et la première direction (X) est compris dans une plage de [0°, 90°), dans la deuxième direction (Y), une distance minimale entre le quatrième cadre (3205) et le deuxième cadre (3202) est comprise entre 500 mm et 1150 mm, et une distance entre des quatrièmes cadres adjacents (3205) est comprise entre 300 mm et 750 mm.

7. Module photovoltaïque selon la revendication 1, dans lequel le cadre (320) comprend deux premiers cadres (3201) et deux deuxièmes cadres (3202), et les premiers cadres (3201) et les deuxièmes cadres (3202) comprennent chacun une première partie (321), une deuxième partie (322) et une troisième partie (323),
les premiers cadres (3201) s'étendent dans une deuxième direction (Y), la deuxième direction (Y) étant parallèle à une direction de longueur du module photovoltaïque, les deuxièmes cadres (3202) s'étendent dans la première direction (X), et les deux premiers cadres (3201) sont reliés de manière fixe aux deux deuxièmes cadres (3202) de sorte que le cadre (320) forme une structure rectangulaire,
le cadre (320) comprend en outre un cadre de renfort (3203), le cadre de renfort (3203) comprenant une première partie (321), une deuxième partie (322) et une troisième partie (323), et
dans la première direction (X), deux extrémités du cadre de renfort (3203) sont reliées de manière fixe aux premiers cadres (3201) respectivement, et dans la deuxième direction (Y), le cadre de renfort (3203) est agencé entre les deux deuxièmes cadres (3202).
